(19) Europäisches Patentamt
European Patent Office
Office européen des brevets

(11) **EP 3 620 283 B1**

(12) **EUROPEAN PATENT SPECIFICATION**

(45) Date of publication and mention
of the grant of the patent:
**30.03.2022 Bulletin 2022/13**

(21) Application number: **19195017.9**

(22) Date of filing: **03.09.2019**

(51) International Patent Classification (IPC):
**B29B 9/16** (2006.01)   **B29B 9/12** (2006.01)
**B29C 64/153** (2017.01)   **B29C 64/295** (2017.01)
**C08J 3/12** (2006.01)   **B33Y 10/00** (2015.01)
**B33Y 30/00** (2015.01)   **B33Y 70/00** (2020.01)

(52) Cooperative Patent Classification (CPC):
**B29B 9/12; B29B 9/16; B29C 64/153;
B29C 64/295; B33Y 10/00; B33Y 30/00;
B33Y 70/00; C08J 3/12;** B29B 2009/125;
C08J 2359/00; C08J 2367/02; C08J 2371/00;
C08J 2377/02

(54) **RESIN POWDER, AS WELL AS METHOD OF AND DEVICE FOR MANUFACTURING A SOLID FREEFORM OBJECT USING SAID POWDER**

HARZPULVER, SOWIE VERFAHREN UND VORRICHTUNG ZUR HERSTELLUNG EINES FESTEN FREIFORMOBJEKTS MIT DIESEM PULVER

POUDRE DE RÉSINE, ET PROCÉDÉ ET DISPOSITIF DE FABRICATION D'UN OBJET DE FORME LIBRE SOLIDE EN UTILISANT LADITE POUDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2018 JP 2018167699**
**21.08.2019 JP 2019150937**

(43) Date of publication of application:
**11.03.2020 Bulletin 2020/11**

(73) Proprietor: **Ricoh Company, Ltd.**
**Tokyo 143-8555 (JP)**

(72) Inventors:
• **IWATSUKI, Hitoshi**
**Tokyo, 143-8555 (JP)**
• **IIDA, Sohichiroh**
**Tokyo, 143-8555 (JP)**
• **SUN, Yunsheng**
**Tokyo, 143-8555 (JP)**
• **OGAWA, Satoshi**
**Tokyo, 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**EP-A1- 3 159 141**   **EP-A1- 3 272 787**
**EP-A1- 3 375 609**   **EP-A1- 3 415 563**
**EP-A2- 3 539 741**   **WO-A1-2017/112723**
**US-A1- 2016 288 206**

**Description**

BACKGROUND

Technical Field

The present invention relates to a resin powder, a method of manufacturing a solid freeform fabrication object, and a device for manufacturing a solid freeform fabrication object.

Description of the Related Art

As a resin powder for use in manufacturing a solid freeform fabrication object, for example, a resin powder having a substantially cylindrical resin powder has been proposed in which a resin melt liquid is extruded and thereafter drawn to form a resin fiber, which is fixed with a movable clamp and moved toward a cutting blade, where the resin fiber is cut to obtain the resin powder (WO 2017/112723 A1).

EP 3 159 141 A1 relates to a powder material used in powder additive manufacturing and a powder additive manufacturing method.

EP 3 415 563 A1 relates to a resin powder for solid freeform fabrication, a device for fabricating a solid freeform fabrication object, and a resin powder.

EP 3 272 787 A1 relates to a resin powder for solid freeform fabrication.

SUMMARY

According to embodiments of the present disclosure, a resin powder is provided which is capable of obtaining a solid freeform fabrication object having a high packing density, excellent strength, and less surface roughness.

The present invention is defined by the appended claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1A is a diagram illustrating a schematic perspective view of an example of a columnar form.
FIG. 1B is a schematic diagram illustrating a side view of the columnar form illustrated in FIG. 1A;
FIG. 1C is a schematic diagram illustrating a side view of an example of a columnar form with no points at ends;
FIG. 1D is a schematic diagram illustrating a side view of another example of a columnar form with no points at ends;
FIG. 1E is a schematic diagram illustrating a side view of another example of a columnar form with no points at ends;
FIG. IF is a schematic diagram illustrating a side view of another example of a columnar form with no points at ends;
FIG. 1G is a schematic diagram illustrating a side view of another example of a columnar form with no points at ends;
FIG. 1H is a schematic diagram illustrating a side view of another example of a columnar form with no points at ends;
FIG. 1I is a schematic diagram illustrating a side view of another example of a columnar form with no points at ends;
FIG. 2 is a photograph illustrating an example of the resin powder according to an embodiment of the present disclosure;
FIG. 3 is an enlarged photograph of a columnar form enclosed by a dotted circle in FIG. 2;
FIG. 4 is a schematic diagram illustrating an example of a particle formed by cutting a columnar form in a diagonal direction;
FIG. 5 is a schematic diagram illustrating an example of the device for manufacturing a solid freeform fabrication object (three-dimensional object) according to an embodiment of the present disclosure;
FIG. 6A is a schematic diagram illustrating an example of the method of manufacturing a solid freeform fabrication object of according to an embodiment of the present disclosure utilizing the device for manufacturing a solid freeform fabrication object according to an embodiment of the present disclosure;
FIG. 6B is a schematic diagram illustrating another example of the method of manufacturing a solid freeform fabrication object according to an embodiment of the present disclosure utilizing the device for manufacturing a solid freeform fabrication object according to an embodiment of the present disclosure;

FIG. 7A is a schematic diagram illustrating another example of the method of manufacturing a solid freeform fabrication object according to an embodiment of the present disclosure utilizing the device for manufacturing a solid freeform fabrication object according to an embodiment of the present disclosure;

FIG. 7B is a schematic diagram illustrating another example of the method of manufacturing a solid freeform fabrication object according to an embodiment of the present disclosure utilizing the device for manufacturing a solid freeform fabrication object according to an embodiment of the present disclosure;

FIG. 8 is a photograph illustrating the resin powder produced in Example 4;

FIG. 9 is a graph illustrating the relationship between the aspect ratio and the frequency of the resin powder produced in Example 4;

FIG. 10 is a graph illustrating the relationship between the aspect ratio and the cumulative number frequency of the resin powder produced in Example 4;

FIG. 11 is a photograph illustrating the resin powder produced in Example 10;

FIG. 12 is a graph illustrating the relationship between the aspect ratio and the cumulative number frequency of the resin powder produced in Example 10;

FIG. 13A is a schematic diagram illustrating an example for obtaining the definition of the aspect ratio and the number distribution of the aspect ratio;

FIG. 13B is a schematic diagram illustrating another example for obtaining the definition of the aspect ratio and the number distribution of the aspect ratio;

FIG. 13C is a schematic diagram illustrating another example for obtaining the definition of the aspect ratio and the number distribution of the aspect ratio;

FIG. 13D is a schematic diagram illustrating another example for obtaining the definition of the aspect ratio and the number distribution of the aspect ratio;

FIG. 14A is a scanning electron microscope (SEM) photograph for obtaining the definition of the aspect ratio and the number distribution of the aspect ratio in the present disclosure;

FIG. 14B is a schematic diagram illustrating an example for obtaining the definition of the aspect ratio and the number distribution of the aspect ratio in the present disclosure;

FIG. 14C is a schematic diagram illustrating another example for obtaining the definition of the aspect ratio and the number distribution of the aspect ratio in the present disclosure;

FIG. 14D is a schematic diagram illustrating another example for obtaining the definition of the aspect ratio and the number distribution of the aspect ratio in the present disclosure; and

FIG. 14E is a schematic diagram illustrating an example for obtaining the definition of the aspect ratio and the number distribution of the aspect ratio in the present disclosure. The accompanying drawings are intended to depict example embodiments of the present invention .

The accompanying drawings are not to be considered as drawn to scale unless explicitly noted. Also, identical or similar reference numerals designate identical or similar components throughout the several views.

DESCRIPTION OF THE EMBODIMENTS

For the sake of simplicity, the same reference number will be given to identical constituent elements such as parts and materials having the same functions and redundant descriptions thereof omitted unless otherwise stated.

Resin powder

The resin powder of the present disclosure contains a resin containing particles, wherein the proportion of the particles in an aspect ratio range X represented by the following inequality 1 is 50 percent by number or more in the number distribution of the aspect ratio of the resin powder:

$$A50 - 1 \leq X \leq A50 + 1 \qquad \text{Inequality 1,}$$

where A50 represents a median of the aspect ratio.

The resin powder of the present disclosure was made based on the knowledge that, in typical technologies, the number distribution of the aspect ratio of the resin powder is not optimized so that the packing density of a solid freeform fabrication object formed by using the resin powder is low and the strength thereof is weak.

Number Distribution of Aspect Ratio of Resin Powder

Due to the observation with a scanning electron microscope (SEM), the aspect ratio of a resin powder can be measured to obtain the number distribution of the aspect ratio of the resin powder.

The sharper the aspect ratio number distribution, that is, the more uniform the form of the resin powder is, the more preferable the resin powder is in terms of conveyance. For example, in solid freeform fabrication (also referred to as three-dimensional modeling), a resin powder having a sharp number distribution of the aspect ratio has good flowability during conveyance and good filling property so that a solid freeform fabrication object obtained by melting the resin powder with a laser, etc., has a good strength and a smooth surface.

As another application, particles with a uniform aspect ratio may be used as a reinforcing agent, and since the uniform shape provides a uniform effect with little unevenness in the reinforcing effect, the filling amount can be reduced, which leads to efficient reinforcement. Moreover, since the specific gravity is lighter than that of conventional glass fibers, it is possible to reduce an increase in weight, which is a disadvantage of the reinforcing agent.

In the number distribution of the aspect ratio of the resin powder of the present disclosure, when the median of the aspect ratio is defined as A50, the proportion of particles of the resin powder in the aspect ratio range X represented by the following inequality 1 is 50 percent by number or more, preferably 51 percent by number or more, more preferably 55 percent by number or more, furthermore preferably 70 percent by number or more, by far furthermore preferably 72 percent by number or more, particularly preferably 80 percent by number or more, more particularly preferably 90 percent by number or more, furthermore particularly preferably 93 percent by number or more, by far furthermore particularly preferably 94 percent by number or more, and most preferably 95 percent by number or more.

$$A50 - 1 \leq X \leq A50 + 1 \qquad \text{Inequality 1.}$$

The proportion of the particles in the aspect ratio range Y represented by the following inequality 2 is preferably 45 percent by number or more, more preferably 48 percent by number or more, furthermore preferably 50 percent by number or more, by far furthermore preferably 55 percent by number or more, particularly preferably 60 percent by number or more, more particularly preferably 63 percent by number or more, furthermore particularly preferably 85 percent by number or more, by far furthermore preferably 90 percent by number or more, most preferably 91 percent by number or more, further most preferably 92 percent by number or more, particularly most preferably 93 percent by number or more, and further particularly most preferably 94 percent by number or more.

$$A50 - 0.5 \leq Y \leq A50 + 1 \qquad \text{Inequality 2.}$$

The proportion of the particles in the aspect ratio range Z represented by the following inequality 3 is preferably 30 percent by number or more, more preferably 40 percent by number or more, furthermore preferably 70 percent by number or more, by far furthermore preferably 75 percent by number or more, particularly preferably 80 percent by number or more, more particularly preferably 84 percent by number or more, furthermore particularly preferably 85 percent by number or more, most preferably 86 percent by number or more, further most preferably 90 percent by number or more, particularly most preferably 97 percent by number or more, and further particularly most preferably 98 percent by number or more.

$$A50 - 0.5 \leq Z \leq A50 + 0.5 \qquad \text{Inequality 3.}$$

When the proportion of the particles in the aspect ratio range X represented by the inequality 1 is 50 percent by number or more, preferably the proportion of the particles in the aspect ratio range Y represented by the inequality 2 is 50 percent by number or more, and preferably the proportion of particles in the aspect ratio range Z of represented by the inequality 3 is 80 percent by number or more, the packing density of the resin powder can be increased and the strength of a solid freeform fabrication object can be enhanced.

Moreover, when the proportion of the particles in the aspect ratio range X represented by the inequality 1 is 50 percent by number or more, preferably the proportion of the particles in the aspect ratio range Y represented by the ineqaulity 2 is 90 percent by number or more, and preferably the proportion of particles in the aspect ratio range Z of represented by the ineqaulity 3 is 90 percent by number or more, the packing density of the resin powder can be further increased and the strength of a solid freeform fabrication object can be further enhanced. Moreover, since flowability of the resin powder can be improved and the movement defect of the resin powder at the time of solid freeform fabrication can be diminished, the strength of a solid freeform fabrication object can be improved.

The calculation method of the proportion of the particles in the aspect ratio ranges X, Y, and Z represented by formula 1, formula 2, and formula 3, respectively, is as follows:
The general aspect ratio is (minor axis L/major axis D) of a particle contained in a resin powder. In the present disclosure, the aspect ratio is obtained from an SEM image obtained by observation with a scanning electron microscope (SEM) in the following manner.

1. When a particle contained in a resin powder has a surface having a maximum length corresponding to 50 percent or more of the particle diameter, L/D is defined as the aspect ratio, where D represents the length of the surface and L represents the length of a side surface, which is perpendicular to the surface.
2. When a particle contained in a resin powder does not have a surface having a maximum length corresponding to 50 percent or more of the particle diameter, the ratio of the major axis L to the minor axis D of the particle is defined as the aspect ratio.

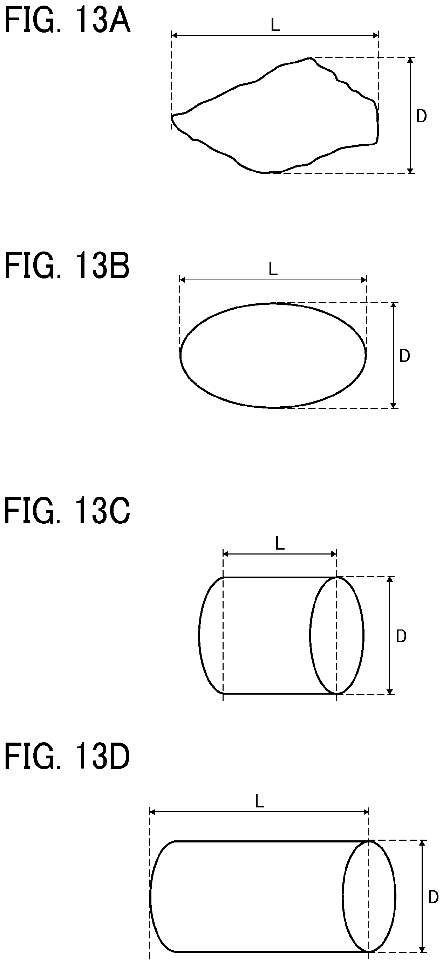

The details of the aspect ratio calculation are shown in FIGS. 13A to 13D. In the case of an irregularly shaped powder as illustrated in FIG. 13A, the aspect ratio (major axis L/minor axis D) is calculated as in 2 mentioned above. Similarly, spherical particles as illustrated in FIG. 13B are calculated according to 2 mentioned above. In the case of a particle having a surface as illustrated in FIGS. 13C and 13D, the aspect ratio is calculated according to 1 mentioned above.

For particles observed with a scanning electron microscope (SEM), 100 particles the aspect of which can be calculated are measured to calculate the number distribution of the aspect ratio to obtain the median A50 of the aspect ratio.

Each of the aspect ratio ranges is defined by inequalities 1, 2, and 3. From the number distribution of the aspect ratio, the "aspect ratio range", "cumulative number frequency", and "occupancy (number frequency)" can be obtained.

In the resin powder of the present disclosure, it is preferable that the particle contained in the resin powder have at least one surface and the surface have a maximum length of 50 percent or more of the particle diameter in terms of flowability of powder and packing property. The particle diameter can be determined by, for example, a scanning electron microscope (SEM).

When the surface perpendicular to the surface is defined as the side surface, the ratio (L/D) of the side surface length L of the particle to the surface length D of the particle is preferably from 0.01 to 20, more preferably from 0.5 to 5, and furthermore preferably from 0.5 to 2.

When the ratio (L/D) is from 0.01 to 20, it is advantageous to strike a balance between the strength of a solid freeform fabrication object and the surface roughness of the solid freeform fabrication object.

The proportion of the particle having an angle between the surface and the side surface of from 70 to 90 degrees or more is preferably 70 percent or more, more preferably 85 percent or more, and furthermore preferably 90 percent or more.

When the proportion of the particles having an angle between the surface and the side surface of from 70 to 90 degrees is 70 percent or more in the entire resin powder, the resin powder has an advantage of good flowability so that a solid freeform fabrication object having a high packing density and high strength can be obtained.

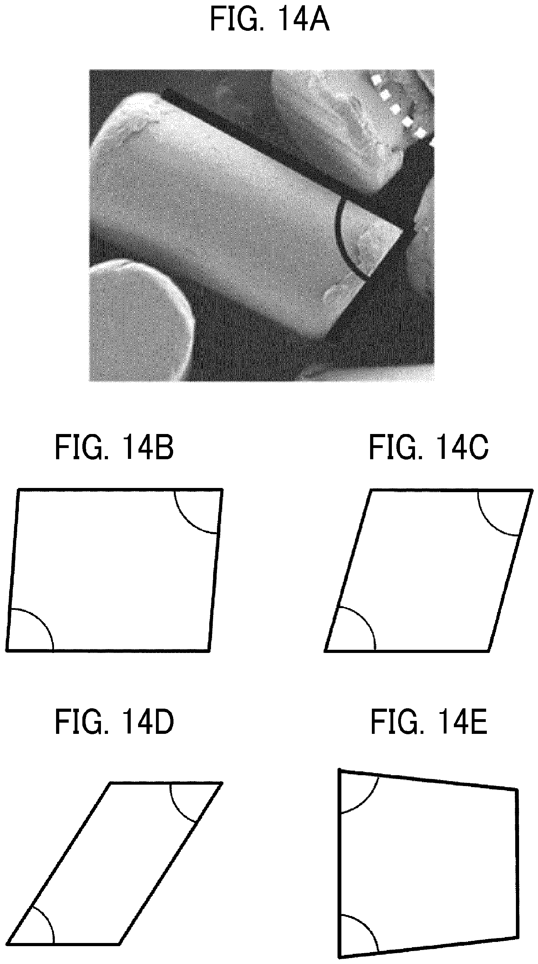

As illustrated in FIGS. 14A to 14E, the angle formed between the surface of the particle and the side surface of the particle observed with a scanning electron microscope (SEM) (JSM-7800FPRIME, manufactured by JEOL Ltd.) is measured and calculated. Regarding the formed angle, two or more angles are measured and the average thereof is identified as the formed angle of the particle.

100 particles the angle of which can be measured are selected from the particles observed in the SEM image and the proportion of the particles having an average formed angle of from 70 to 90 degrees C is calculated.

The average circularity of the resin powder of the present disclosure is preferably from 0.60 to 0.95, more preferably from 0.65 to 0.90, furthermore preferably from 0.70 to 0.90, particularly preferably from 0.75 to 0.90, more particularly preferably from 0.80 to 0.90, and most preferably from 0.86 to 0.88.

The average circularity is an index for the degree of circularity and the average circularity of 1 means true circle. The circularity is obtained by the following relationship, where S represents an area (number of pixels) and L represents a perimeter.

$$\text{Circularity} = 4\pi S/L^2$$

The average circularity can be measured by a wet-process flow type particle size/form analyzer (FPIA-3000, manufactured by SYSMEX CORPORATION), etc.

This device takes particle images at high speed in a liquid suspension flowing in a glass cell by a charge-coupled device (CCD) and analyzes individual particle images in real time. This kind of device is suitable to obtain the average circularity.

The number of measuring counts of the particles is not particularly limited and preferably 1,000 or greater and more preferably 3,000 or greater.

The volume average particle diameter Dv of the resin powder is preferably 1 $\mu$m or more, more preferably 20 $\mu$m or more, furthermore preferably 30 $\mu$m or more, by far furthermore preferably 40 $\mu$m or more, particularly preferably 50 $\mu$m or more, more particularly preferably 60 $\mu$m or more, furthermore particularly preferably 70 $\mu$m or more, by far furthermore particularly preferably 72 $\mu$m or more, and most preferably 73 $\mu$m or more.

The volume average particle diameter Dv of the resin powder is preferably 900 $\mu$m or less, more preferably 500 $\mu$m or less, furthermore preferably 450 $\mu$m or less, by far furthermore preferably 200 $\mu$m or less, particularly preferably 150 $\mu$m or less, more particularly preferably 120 $\mu$m or less, furthermore particularly preferably 100 $\mu$m or less, by far furthermore particularly preferably 90 $\mu$m or less, and most preferably 80 $\mu$m or less.

The volume average particle diameter Dv of the resin powder is preferably from 10 nm to 10 mm, more preferably from 100 nm to 1 mm, furthermore preferably from 1 to 900 $\mu$m, by far furthermore preferably from 1 to 500 $\mu$m, particularly preferably from 1 to 450 $\mu$m, more particularly preferably from 1 to 200 $\mu$m, by far furthermore particularly preferably from 1 to 150 $\mu$m, and most preferably from 10 to 100 $\mu$m.

The volume average particle diameter Dv can be measured by using, for example, a particle size distribution measuring instrument (Microtrac MT3300EXII, manufactured by MicrotracBEL Corp.).

The resin powder of the present disclosure preferably has a columnar form as the particle and may contain particles not having a columnar form.

Columnar Form

The columnar form has a first surface, a second surface, and a side surface. In the range observed with a scanning electron microscope (SEM), it is preferable that the outer peripheral area of the first surface and the outer peripheral area of the second surface extend toward the side surface.

Columnar Form

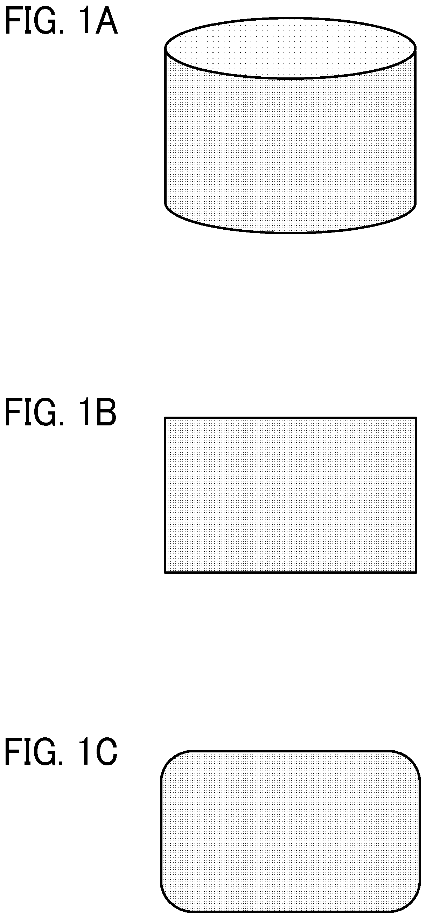

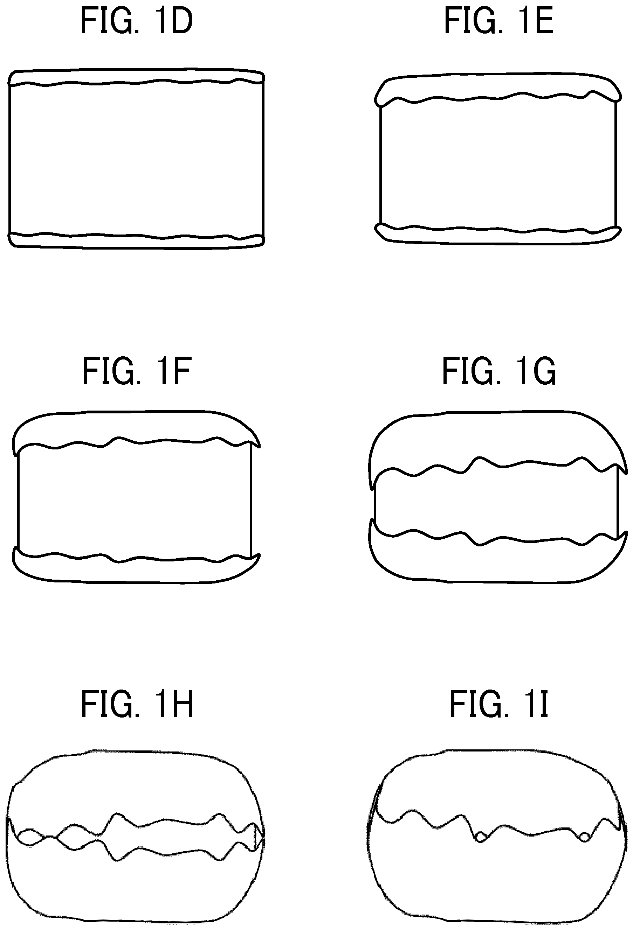

The form of the columnar form is described with reference to FIGS. 1A to 1I.

FIG. 1A is a diagram illustrating a schematic perspective view of an example of a columnar form. FIG. 1B is a schematic diagram illustrating a side view of the columnar form illustrated in FIG. 1A. FIG. 1C is a diagram illustrating a side view of an example of a columnar form with no points at ends. FIGS. 1D to 1I are diagrams illustrating side views of other examples of the columnar form with no points at ends.

As the columnar form illustrated in FIG. 1A is observed from side, the form is rectangular as illustrated in FIG. 1B. It has angled portions, i.e., four points. Examples of forms with no points at ends are illustrated in FIGS. 1C to 1I.

Whether a columnar form has a point can be identified by a projected image of the side surface of the columnar form. For example, the side of a columnar form is observed by a scanning electron microscope (S4200, manufactured by Hitachi Ltd.), etc. to acquire a two-dimensional image. In this case, the projected image is quadrilateral and a portion constituted by two adjacent sides is identified as an end part. As a result, when the end part is formed of only two adjacent straight lines, an angle is formed and the columnar form has a point. If the end part is arc as illustrated in FIGS. 1C to 1I, no point is formed at the end part.

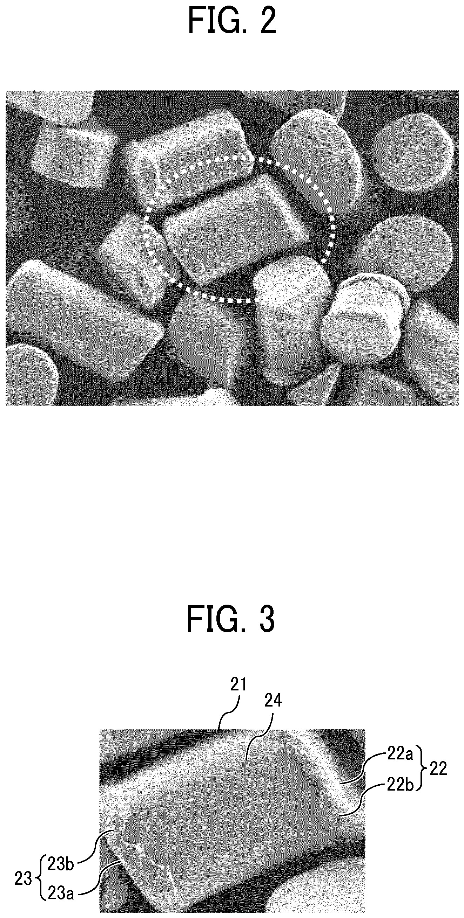

FIG. 2 is a photograph illustrating an example of resin powder including columnar particles. FIG. 3 is a photograph of a columnar form enclosed by a dotted circle in FIG. 2. FIG. 2 and FIG. 3 are photographs by scanning electron microscope (SEM) observation.

As illustrated in FIG. 3, a column 21 includes a first surface 22, a second surface 23, and a side surface 24.

The first surface 22 includes a first opposing surface 22a and a first perimeter area 22b having a form stretched along the side surface 24. The first perimeter area 22b of the first surface 22 is a continuous surface with the first opposing surface 22a via a curved surface and substantially orthogonal to the first opposing surface 22a.

The second surface 23 includes a second opposing surface 23a facing the first opposing surface 22a and a second perimeter area 23b having a form stretched along the side surface 24. The second perimeter area 23b is a continuous surface with the second opposing surface 23a via a curved surface and substantially orthogonal to the second opposing surface 23a.

The side surface 24 is adjacent to the first surface 22 and the second surface 23. In addition, the first perimeter area 22b and the second perimeter area 23b are stretched on the side surface 24.

The form of the first perimeter area 22b of the first surface 22 and the second perimeter area 23b of the second surface 23 (both of which are hereinafter also referred to as perimeter area) is at least distinguishable from the side surface 24 in a scanning electron microscope (SEM) image. For example, a form of the perimeter area partially integrated with the side surface 24, a form of the perimeter area adjacent to the side surface 24, a form having a space between the perimeter area and the side surface 24 are allowed. In addition, the first perimeter area 22b and the second perimeter area 23b are preferably provided along the surface direction substantially identical to the surface direction of the side surface 24.

As illustrated in FIG. 3, the first perimeter area 22b and the second perimeter area 23b stretch along the side surface 24 and are situated thereon. In addition, the structure of the first surface 22 and the second surface 23 covering around the connection area of the first perimeter area 22b of the first surface 22 and the second perimeter area 23b of the second surface 23 and the side surface 24 is also referred to as a bottle cap form.

In the present disclosure, the first perimeter area 22b and the second perimeter area 23b mean the area of the column 21 in the area observed by scanning electron microscope (SEM). That is, the area of the column 21 in the area not observed by the SEM is not included in the first perimeter area 22b and the second perimeter area 23b.

In addition, the first perimeter area 22b having a form stretched along the side surface 24 means that all (but limited to the area observed by SEM) of the first perimeter area 22b stretches along the side surface 24, and does not include the first perimeter area 22b partially stretching along the side surface 24.

In addition, the second perimeter area 23b having a form stretched along the side surface 24 means that all (but limited to the area observed by SEM) of the second perimeter area 23b stretches along the side surface 24, and does not include the second perimeter area 23b partially stretching along the side surface 24.

The first perimeter area 22b and the second perimeter area 23b respectively are forms of the first surface 22 and the side surface 24 of the second surface 23 stretching along the side surface 24. Therefore, the first perimeter area 22b and the first opposing surface 22a and the second perimeter area 23b and the second opposing surface 23a smoothly continue via curved surfaces. Due to the first perimeter area 22b and the second perimeter area 23b, the column 21 is free of a corner (angled, pointed) portion. Therefore, the packing density of resin powder including the column 21 can be increased, thereby enhancing the strength of an obtained solid freeform fabrication object.

Further, due to the column 21 without a corner portion, flowability of resin powder including the column 21 can be enhanced, so that poor moving of the resin powder during solid freeform fabrication can be reduced, thereby enhancing the strength of an obtained solid freeform fabrication object. In addition, the column 21 having a form in which all of the first perimeter area 22b and all of the second perimeter area 23b existing at least in the observation area by SEM stretch along the side surface 24 can demonstrate sufficient packing density and flowability required as the powder for solid freeform fabrication.

The first perimeter area 22b and the second perimeter area 23b are formed such that the length of the shortest portion in the height direction of the column 21 is preferably 1 $\mu$m or more, more preferably 3 $\mu$m or more, and furthermore preferably 5 $\mu$m or more. When the length of the shortest portion in the height direction of the column 21 in the first perimeter area 22b and the second perimeter area 23b is 1 $\mu$m or more, curved surfaces between the first perimeter area 22b and the first opposing surface 22a and the second perimeter area 23b and the second opposing surface 23a become smoother so that the packing density of the resin powder including the column 21 can be increased, and the strength of a solid freeform fabrication object can be enhanced. Further, when the curved surface is smoother, flowability of resin powder including the column 21 can be enhanced, so that poor moving of the resin powder during solid freeform fabrication can be reduced, thereby enhancing the strength of an obtained solid freeform fabrication object.

The first perimeter area 22b and the second perimeter area 23b are the length in the height direction of the column 21 and preferably have a maximum length of 10 $\mu$m or more and more preferably 15 $\mu$m or more along the height direction of the column 21. This length is identified in the range observed by an SEM.

There is no specific limit to the columnar form. It can be suitably selected to suit to a particular application. For example, a solid form such as a substantially cylindrical form or a substantially polygonal prism is preferable. The substantially cylindrical form and substantially polygonal prism include solid forms having the first perimeter area 22b and the second perimeter area 23b. The forms of the first opposing surface 22a and the second opposing surface 23a are determined depending on the form of the column 21. For example, in a case where a line (point) in the height direction of the column 21 is not observed while a smooth surface is uniformly observed, the column 21 is substantially cylindrical and the first opposing surface 22a and the second opposing surface 23a are substantially circular. For example, in a case where multiple surfaces segmented by a line (point) in the height direction of the column 21 is observed, the column 21 is substantially prismatic and the first opposing surface 22a and the second opposing surface 23a are substantially polygonal.

As described above, the column 21 has the first opposing surface 22a and the second opposing surface 23a opposing each other. The first opposing surface 22a may be slanted against the second opposing surface 23a. However, the first opposing surface 22a and the second opposing surface 23a are preferably substantially parallel to each other. Both being substantially parallel to each other improves flowability of the powder for solid freeform fabrication including the column 21.

The ratio of the maximum length of the straight line drawn in the first opposing surface 22a or the second opposing surface 23a of the column 21 to the height of the column 21 is from 0.5 to 5.0, more preferably from 0.7 to 2.0, and furthermore preferably from 0.8 to 1.5.

Substantially Cylindrical Form

The substantially cylindrical form is not particularly limited and can be suitably selected to suit to a particular application. Examples are a substantially truly circular cylindrical form having a substantially truly circular first opposing surface and a substantially truly circular second opposing surface and a substantially truly ellipsoidal cylindrical form having a substantially truly ellipsoidal first opposing surface and a substantially truly ellipsoidal second opposing surface. Of these, a truly cylindrical form is preferable. The circular portion of the substantially cylindrical form may be partially missing. In addition, the substantial circle has a ratio of the major axis to the minor axis of from 1 to 10.

The size of the area of the first opposing surface and the size of the area of the second opposing surface may not be completely identical but the circle diameter ratio of the large surface to the small surface is preferably 1.5 or less. More preferably, the ratio is 1.1 or less in terms that the same form can be more densely packed.

The diameter of the substantially cylindrical form has no particular limit and can be suitably selected to suit to a particular application. For example, the diameter is preferably from 5 to 100 $\mu$m. When the substantially circle portion of the substantially cylindrical form is a substantially ellipse, the diameter means the major axis.

The height of the substantially cylindrical form has no particular limit and can be suitably selected to suit to a particular application. For example, the height is preferably from 5 to 100 $\mu$m.

Substantially Polygonal Prism

The form of the substantially polygonal prism is not particularly limited and can be suitably selected to suit to a particular application. Examples are polygonal prism having a polygonal first opposing surface and a polygonal second opposing surface such as a substantially rectangular parallelepiped, a substantially cubic, a substantially triangular prism, and a substantially hexagonal prism. Of these, a substantially hexagonal prism is preferable and a substantially regular hexagonal prism is more preferable. In a substantially polygonal prism, particles (powder) can be packed without a space so that the strength of an obtained solid freeform fabrication object can be enhanced. Note that the substantially polygonal prism may be partially missing.

The size of the area of the first opposing surface 22a and the size of the area of the second opposing surface 23a may not be completely identical but the ratio of the average of the sides of a polygon of the large surface to the small surface is preferably 1.5 or less. More preferably, the ratio is 1.1 or less in terms that the same form is advantageous to be densely packed.

The length of the longest straight line drawn on the first opposing surface 22a and the second opposing surface 23a of a substantially polygonal prism has no particular limit and can be suitably selected to suit to a particular application. For example, it is preferably from 5 to 100 $\mu$m.

The height of the substantially polygonal prism has no particular limit and can be suitably selected to suit to a particular application. For example, the height is preferably from 5 to 100 $\mu$m.

In the present disclosure, the side forming the height between the first opposing surface 22a and the second opposing surface 23a of the column 21 includes a crushed state (for example, barrel-like form in the case of a cylindrical form) as a result of the resin softening during cutting. However, space appears between powders having arcs. Therefore, the side is preferably straight in terms of more dense packing of powder.

Proportion of Columnar Form

The proportion (based on the number) of the column 21 contained in the resin powder is preferably 50 percent or more and more preferably 70 percent or more in the resin powder.

As the proportion of the column 21 having the first perimeter area 22b and the second perimeter area 23b mentioned above in the resin powder increases, the packing density of the resin powder including the column 21 and the strength of an obtained solid freeform fabrication object is enhanced. Further, as the proportion of the column 21 having the first perimeter area 22b and the second perimeter area 23b mentioned above in the resin powder, flowability of the resin powder including the column 21 can be enhanced, so that poor moving of the resin powder during solid freeform fabrication can be reduced, thereby enhancing the strength of an obtained solid freeform fabrication object.

A specific calculation method of the amount of the column 21 is as follows: That is, a photograph of resin powder is taken at a magnification of 150 times using a scanning electron microscope (SEM), the number of resin powder particles and the number of the columnar forms are counted in the image. Thereafter, the number of the columnar forms is divided by the number of the resin powder and multiplied by 100 to obtain the amount (proportion).

The magnifying power of the SEM is suitably changed in accordance with the size of the resin powder. In addition, in the present disclosure, when counting the number of resin powder particles and the number of columnar forms in the SEM image, only the resin powder particles and the columnar forms having a longest part of 20 $\mu$m or more in the SEM image are counted. Further, the number of resin powder particles is 100 or more when calculating the proportion of the columnar forms.

The proportion (on number basis) of the columnar form having a substantially polygonal prism contained in the resin powder is preferably 40 percent or more in the resin powder.

As the proportion of the column 21 having a substantially polygonal prism having the first perimeter area 22b and the second perimeter area 23b mentioned above in the resin powder increases, the packing density of the resin powder including the column 21 and the strength of an obtained solid freeform fabrication object is enhanced as described above.

Resin

It is preferable to use a thermoplastic resin for the resin powder of the present disclosure.

In general, thermoplastic resins have plasticity and are softened when heated and solidified when cooled.

The thermoplastic resin preferably has a melting point of 100 degrees C or higher as measured according to ISO 3146 regulation. It is preferable that the melting point of the resin powder as measured according to ISO 3146 regulation be 100 degrees C or higher because it is within the heat resistance temperature range.

The melting point can be measured according to ISO 3146 regulation (plastic transition temperature measuring method, JIS K7121 format) using a differential scanning calorimeter (DSC). When a plurality of melting points exist, the melting point on the higher temperature side is used.

The thermoplastic resin has no particular limit and can be suitably selected to suit to a particular application. Specific examples include, but are not limited to, polyolefin, polyamide, polyester, polyther, polyarylketone, a liquid crystal polymer (LCP), polyacetal (POM), polyimide, a fluorochemical resin, and polyphenylene sulfide. These can be used alone or in combination. Of these, polyolefin, polyamide, polyester, and polyether are preferable.

Specific examples of the polyolefine include, but are not limited to, polyethylene (PE) and polypropylene (PP). These can be used alone or in combination.

Specific examples of the polyamide include, but are not limited to, polyamide 410 (PA410), polyamide 6 (PA6), polyamide 66 (PA66), polyamide 610 (PA610), polyamide 612 (PA612), polyamide 11 (PA11), polyamide 12 (PA12), semi-aromatic polyamide 4T (PA4T), polyamide MXD6 (PAMXD6), polyamide 6T (PA6T), polyamide 9T (PA9T), and polyamide 10T (PA10T). These can be used alone or in combination.

Of these, PA9T is also referred to as polynonane methylene terephthal amide and constituted of a diamine having 9 carbon atoms and a terephthalic acid. In general, since the carbon acid side is an aromatic series, PA9T is referred to as semi-aromatic series. Moreover, as a whole aromatic series in which both carboxylic acid side and diamine side are aromatic, aramid constituted from p-phenylenediamine and a terephathalic acid is also included as polyamides.

Specific examples of the polyester include, but are not limited to, polyethyleneterephthalate (PET), polybutylene terephthalate (PBT), and polylactic acid (PLA). To impart heat resistance, polyester including aromatic series partially including terephthalic acid and isophthalic acid is also suitably used.

Specific examples of the polyether include, but are not limited to, polyether etherketone (PEEK), polyetherketone (PEK), polyether ketone ketone (PEKK), polyaryl ether ketone (PAEK), polyether ether ketone ketone (PEEKK), and polyether keone ether ketone ketone (PEKEKK). These can be used alone or in combination.

Of these, polybutylene terephthalate, polyamide, polyacetal, and polyether ether ketone are preferable.

The thermoplastic resin is preferably a crystalline resin. The crystalline resin has a melting peak as measured according to ISO 3146 regulation (plastic transition temperature measuring method, JIS K7121 format).

Specific examples of the crystalline resin include, but are not limited to, polybutylene terephthalate (PBT), polyether etherketone (PEEK), and polyamide 12 (PA12). These can be used alone or in combination.

Of these, a crystal-controlled crystalline thermoplastic resin is preferable. Such a crystalline thermoplastic resin having a crystal size and a controlled crystal alignment can be obtained by a method of applying external stimuli such as heat, drawing, crystal nuclear material, and ultrasonic treatment.

Additive

The resin powder may contain an additive in addition to the resin.

Such an additive is not particularly limited and can be suitably selected to suit to a particular application. For example, an antioxidant, a flame retardant, an inorganic reinforcing agent, a fluidizer, a plasticizer, a crystal nucleating agent, etc. can be added.

The additive may be mixed with the thermoplastic resin before or after the resin is powdered.

Such an antioxidant is not particularly limited, can be suitably selected to suit to a particular application, and includes a so-called deterioration inhibitor and stabilizer. Examples include, but are not limited to, hydrazide-based compounds and amide-based compound, which are metal deactivators, phenol-based compounds (hindered phenol-based compounds) and amine-based compounds, which are radical scavengers, phosphate-based compounds and sulfur-based compounds, which are peroxide decomposers, and triazine-based compounds, which are ultraviolet light absorbers. These can be used alone or in combination.

Of these, a combination of a radical scavenger and a peroxide decomposer is preferable in terms of the antioxidant effect.

Examples of the flame retardant include, but are not limited to, a halogen-based retardant, a phosphorine-based retardant, an inorganic hydrated metal compound-based retardant, a nitrogen-containing retardant, and a silicone-based retardant and an inorganic reinforcing agent. These can be used alone or in combination. If two or more flame retardants are used in combination, the combination of a halogen-based retardant and an inorganic hydrated metal compound-based flame retardant is preferable to enhance flame retardancy.

Flame retardancy of resin powder can be evaluated by, for example, JIS K6911 format, JIS L1091 format (ISO 6925 regulation), JIS C3005 format, and a pyrogen test (using a cone calorimeter).

The proportion of the flame retardant in the total amount of the resin powder is preferably from 1 to 50 percent by mass and more preferably from 10 to 30 percent by mass to further enhance flame retardancy. When the proportion is within the above-specified range, flame retardancy is sufficient.

As the inorganic reinforcing agent, for example, inorganic fibrous materials such as glass fiber, carbon fiber, and aramid fiber and inorganic laminar silicates such as talc, mica, and montmorillonite are usable. Addition of an inorganic reinforcing agent contributes to enhancing flame retardancy. It is also preferable in terms of striking a balance of strengthening physical property and flame retardancy.

The fluidizer partially or entirely covers the surface of the resin powder to improve flowability of the resin powder. If flowability of the resin powder increases, surface smoothness of the powder layer during recoating increases. In addition, voids in the resin powder are reduced, which makes it possible to further improve surface property, dimension accuracy, and strength of a solid freeform fabrication object. It is preferable that such a fluidizer cover the surface of the resin powder. However, the fluidizer may be partially embedded in the resin powder.

The average primary particle diameter of the fluidizer is preferably 500 nm or less and more preferably 50 nm or less. When the average primary particle diameter is in this range, the covering ratio of the surface of the resin powder by fluidizer can be increased so that voids can be reduced in addition to the enhancement of flowability.

There is no specific limit to the fluidizer and it can be suitably selected to suit to a particular application. For example, spherical inorganic particles are preferable. In particular, metal oxide is preferable. Specific examples include, but are not limited to, silica, alumina, titania, magnesium oxide, tin oxide, iron oxide, and copper oxide. Of these, silica and titania are preferable. These can be used alone or in combination.

The fluidizer having a hydrophobized surface is preferably used. There is no specific limit to the hydrophobizing method and known methods can be suitably selected. Specific examples of the hydrophobizing agent include, but are not limited to, silane coupling agents such as hexamethyl disilazane (HMDS) and dimethyldichlorosilane (DMDS) and silicone oil treating agents such as dimethyl silicone oil and amino-modified silicone oil. Of these, siliane coupling agents are preferably used.

The processing amount of the hydrophobizing agent is preferably from 2 to 6 mg/m$^2$ per surface area of a fine particle.

The proportion of the fluidizer in the resin powder is preferably from 0.05 to 3 percent by mass and more preferably from 0.1 to 1.5 percent by mass. When the proportion is within the range specified above, flowability of the resin powder can be improved and at the same time the impact of reduction of packing density ascribable to an increase of voids can be minimized, which is preferable.

A known powder mixer is used in the mixing and coating processes of the fluidizer with the resin powder. A mixer equipped with a jacket, etc. is preferably used to control the temperature of the inside of the mixer. In addition, it is possible to arbitrarily change the rotational frequency, speed, time, temperatures, etc. of the powder mixer. Specific examples of the powder mixer include, but are not limited to, a V-type mixer, a Henschel mixer, a Rocking mixer, a Nautor mixer, and a Super mixer.

Method of Manufacturing Resin Powder

The method of manufacturing the resin powder of the present disclosure includes forming a fibrous form, aligning the fibrous form, joining the fibrous form, cutting the joined fibrous form, and other optional processes.

In the method of manufacturing the resin powder, since the joined fibrous form is cut in the cutting process after the position and the orientation of the joined fibrous form are fixed in the joining process, the cut width and the cut direction of the joined fibrous form can be uniform, thereby obtaining a uniform columnar form. That is, as in the conventional method, in a method of fixing resin fiber with a movable clamp, moving it toward a cutting device, and cutting the resin fiber to obtain powder, the resin fiber is not sufficiently fixed. Therefore, at the time of cutting, the resin fiber moves during cutting, so that the cut width and the cut direction vary. This variation of the cut width and the cut direction causes production of cut articles having different sizes and forms.

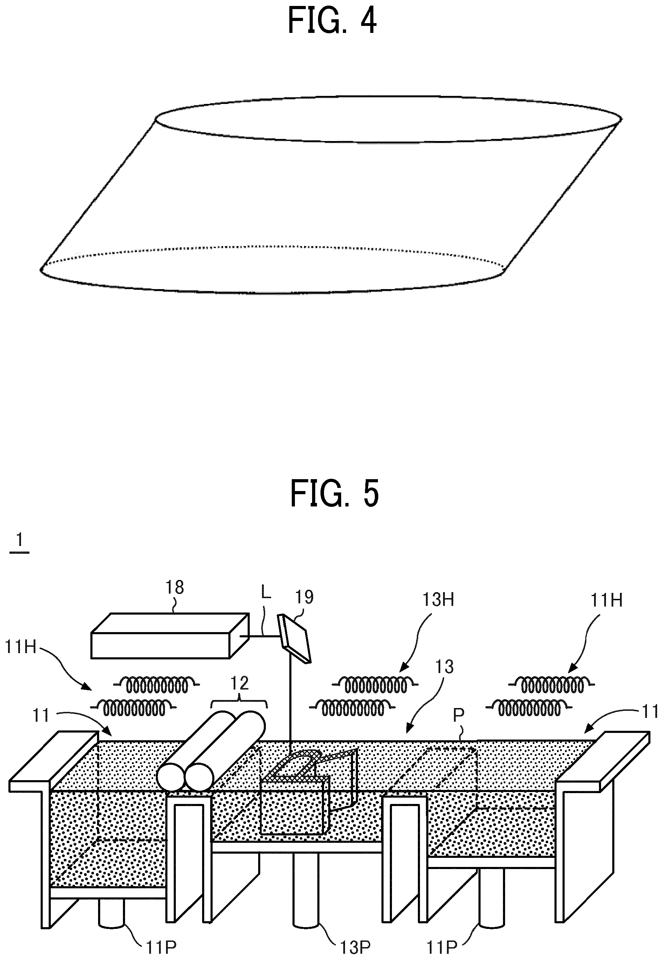

In addition, for example, a massive amount of powder having an unexpected form is produced due to cutting a resin having a cylindrical form in a diagonal way as illustrated in FIG. 4. When such a cut object is used, since the three-dimensional form is not symmetrical, it is not easy to obtain a large amount of columnar forms having all of the first perimeter areas and all of the second perimeter areas observed by an SEM extending along the side surface. Further, if the size of the cut article is unequal, the cut articles are flattened by an excessive force received in the stirring process, and in particular, large cut articles in comparison with other cut articles cannot have desired forms.

Therefore, to obtain particles having a proportion of 50 percent by number or more in the aspect ratio range X represented by the following inequality 1, it is preferable to include forming a fibrous form, joining the fibrous form, cutting the joined fibrous form, preferably stirring, and more preferably, joining into a sheet form with heat under a pressure.

Forming Fibrous Form

In the process of forming a fibrous form (i.e., forming a resin powder material into fibrous materials), a resin powder material is turned into a fibrous material, wherein the resin powder material contains resin containing particles, the proportion of which is 50 percent by number or more in an aspect ratio range X represented by the following inequality 1 in a number distribution of the aspect ratio of the resin powder.

$$A50 - 1 \leq X \leq A50 + 1 \quad \text{Inequality 1,}$$

where A50 represents a median of the aspect ratio.

In the forming a fibrous form, it is preferable to extrude resin melt liquid into a fibrous form while stirring the resin powder material at a temperature 30 degrees C or greater higher than the melting point using an extruder. It is preferable to draw (stretch) the resin melt liquid to about 1/1 to about 1/10 to obtain the fibrous form. The form of the cross section of the fiber depends on the form of the nozzle orifice of the extruder. For example, if the cross section is circular, the nozzle orifice is preferably circular. In the forming a fibrous form, crystallinity of the resin can be controlled.

Joining Fibrous Form

In the joining fibrous forms, the fibrous materials aligned in the same direction are joined (integrated) to form a jointed material.

In the joining fibrous forms, it is preferable to join the fibrous materials aligned is heated under a pressure.

Before the joining a fibrous form process, a plurality of the fibrous materials produced in the forming a fibrous form are aligned and arranged side by side for joining the fibrous form. As a method of joining the fibrous form, there are a method of joining the materials into a sheet-like form with heat under a pressure and a method of joining the materials by adding water to the fiber to cool it down to fix it in ice. Of these, the method of joining the materials into a sheet-like form with heat under a pressure is preferable.

In this step, the fibrous material can be fixed.

When a plurality of fibrous materials arranged in the same direction are joined into a sheet-like form with heat under a pressure, the heating temperature varies depending on the type of resin used. Preferably, it is below the melting point of the fibrous material and also, is preferably 100 degrees C or more lower than the melting point of the fibrous materials. In addition, the pressure to be applied is preferably 10 MPa or lower. The heating temperature and the pressure are preferably within the range in which each joined fiber is separated after the next step of cutting.

During "Heat under a pressure", it is preferable but not necessary to apply heat and pressure at the same time. For example, it is possible to apply a pressure to the material in a residual heat remaining state after the heat application.

In addition, the form of the joined material is not limited to a sheet-like form if the next step of cutting is suitably processed. Also, the fiber is not necessarily completely but substantially completely aligned.

Note that when the cross-section of the form of the fibrous material obtained in the forming a fibrous form is a circle, the fibrous material is partially or entirely transformed into a form having a polygonal cross-section. This makes it possible to produce a joined material in which a fibrous material having a polygonal cross section is joined.

Cutting Process

In the cutting process, the joined fibrous form is cut to obtain a cut article.

In the cutting step, it is preferable to continuously cut the joined material manufactured in the joining process to obtain a cut article.

As the cutting device, it is possible to use, for example, a cutter employing guillotine having a top blade and a bottom blade, a cutter employing a press-cutting method using a bottom plate and top blade, and a cutter to cut a material

utilizing $CO_2$ laser beams, etc. Such a cutter cuts the joined material in such a manner that it can have a cutting surface perpendicular to the longitudinal direction of the fiber which forms the joined material.

The cut width of the cutting device has no particular limit and can be suitably selected to suit to a particular application. For example, the cut width is preferably from 5.0 to 100.0 $\mu$m.

The cutting speed of the cutting device has no particular limit and can be suitably selected to suit to a particular application. For example, the cutting speed is preferably from 10 to 1,000 shots per minute (spm).

Other Optional Process

The other optional processes are not particularly limited and can be suitably selected to suit to a particular application. Examples are a stirring process and a control process.

Due to the stirring process, the first perimeter area and the second perimeter area can be manufactured.

In the stirring process, it is preferable that the cut article produced in the cutting process be stirred to melt the surface due to mechanical friction to obtain a columnar form.

The stirring method is not particularly limited and can be suitably selected to suit to a particular application. Examples are various spherodization methods such as a method of colliding cut materials with each other, a method of colliding a cut material with a material other than the cut material.

The rotational frequency during stirring is not particularly limited and can be suitably selected to suit to a particular application. Preferably, it is from 500 to 10,000 rpm.

The rotation time during stirring has no particular limit and can be suitably selected to suit to a particular application. For example, it is preferably from 1 to 60 minutes.

Application of Resin Powder

The resin powder of the present disclosure is suitably used in various solid freeform fabrication methods such as SLS method, SMS method, MJF (Multi Jet Fusion) method, HSS (High Speed Sintering) method, or BJ (Binder Jetting) method.

The resin powder of the present disclosure can be suitably applied to surface modifying agents, spacers, lubricants, paints, grind stone, additives, secondary battery separator, foods, cosmetics, and cloths in addition to the solid freeform fabrication method. In addition, it can be used as material or metal substitution material for use in fields such as auto mobiles, precision devices, semiconductor, aerospace, and medicals.

Method of Manufacturing Solid Freeform Fabrication Object and Device for Manufacturing Solid Freeform Fabrication Object

The method of manufacturing a solid freeform fabrication object of the present disclosure includes forming a layer (layer forming process), melting the layer (melting process), repeating the forming a layer and the melting the layer, and other optional processes.

The device for manufacturing a solid freeform fabrication object of the present disclosure includes a supply tank, a layer forming device, a melting device, and other optional devices.

Layer Forming Process and Layer Forming Device

In the layer forming process, a layer is formed which contains a resin powder containing resin containing particles, the proportion of which is 50 percent by number or more in an aspect ratio range X represented by the following inequality 1 in a number distribution of the aspect ratio of the resin powder and the layer forming process is executed by the layer forming device.

$$A50 - 1 \le X \le A50 + 1 \qquad \text{Inequality 1,}$$

where A50 represents a median of the aspect ratio.

The layer forming device is not particularly limited and can be suitably selected to suit to a particular application. Examples are a roller, a blade, a brush, and a combination thereof.

Melting Step and Melting Device

In the melting step, the layer formed by the layer forming device is irradiated with electromagnetic wave to melt the layer and the melting step is executed by a melting device.

The melting device is not particularly limited and can be suitably selected to suit to a particular application.

Examples include a $CO_2$ laser, an infrared irradiation source, a microwave generator, a radiant heater, an LED lamp, or an electromagnetic irradiation source such as a combination thereof.

Other Processes and Other Devices

The other processes are not particularly limited and can be suitably selected to suit to a particular application. For example, a control process is selected.

The other devices are not particularly limited and can be suitably selected to suit to a particular application. For example, a control device is selected.

FIG. 5 is a schematic diagram illustrating a device for manufacturing a solid freeform fabrication object according to an embodiment of the present disclosure. As illustrated in FIG. 5, a solid freeform fabrication device 1 includes a supply tank 11 as an example of the accommodating device to accommodate resin powder P for fabrication, a roller 12 to supply the resin powder P accommodated in the supply tank 11, a laser scanning space 13 where the resin powder P supplied by the roller 12 is disposed and scanned with a laser L, an electromagnetic irradiation source 18 as the irradiation source of the laser L as electromagnetic rays, and a reflection mirror 19 to reflect the laser L emitted from the electromagnetic irradiation source 18 to a determined position on the laser scanning space 13.

In addition, the solid freeform fabrication device 1 further includes heaters 11H and 13H to respectively heat the resin powder P in the supply tank 11 and the resin powder P accommodated in the laser scanning space 13.

The reflection surface of the reflection mirror 19 moves based on two-dimensional data of a three-dimensional (3D) model while the electromagnetic irradiation source 18 emits the laser L. The two dimensional data of the 3D model represents each cross section form obtained when a 3D model is sliced with a predetermined interval. When the reflection angle of the laser L changes, the portion indicated by the two-dimensional data in the laser scanning space 13 is selectively irradiated with the laser L. The resin powder positioned at the irradiation position of the laser L is melted and sintered to form a layer. That is, the electromagnetic irradiation source 18 serves as a layer forming device to form each layer of a solid freeform fabrication object from the resin powder P.

In addition, the supply tank 11 and the laser scanning space 13 of the solid freeform fabrication device 1 respectively includes pistons 11P and 13P. The pistons 11P and 13P respectively move the supply tank 11 and the laser scanning space 13 up or down along the lamination direction of the solid freeform fabrication object at the completion of layer fabrication. Due to this, fresh resin powder P for use in fabrication of a layer can be supplied from the supply tank 11 to the laser scanning space 13.

The solid freeform fabrication device 1 changes the irradiation position of the laser by the reflection mirror 19 to selectively melt the resin powder P. The present disclosure is not limited thereto.

The resin powder of the present disclosure can be suitably used in a solid freeform fabrication device employing selective mask sintering (SMS) method. In the SMS method, for example, resin powder is partially masked by a shielding mask and the unmasked portion is irradiated with electromagnetic rays such as infrared rays so that the resin powder is selectively melted to obtain a fabrication object. In the case of using the SMS process, the resin powder P preferably contains at least one of a heat absorbent, dark material, etc. to reinforce infrared absorbability. Examples of the heat absorbent or the dark material are carbon fiber, carbon black, carbon nano tube, and cellulose nano fiber. The SMS process suitably usable is described in, for example, the specification of US Patent No. 6,531,086.

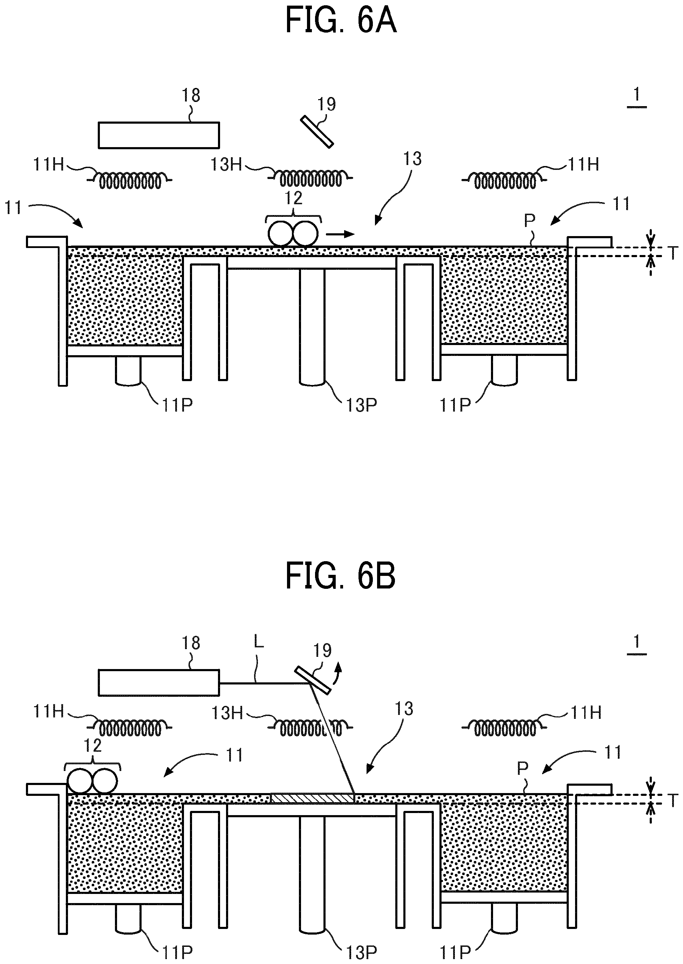

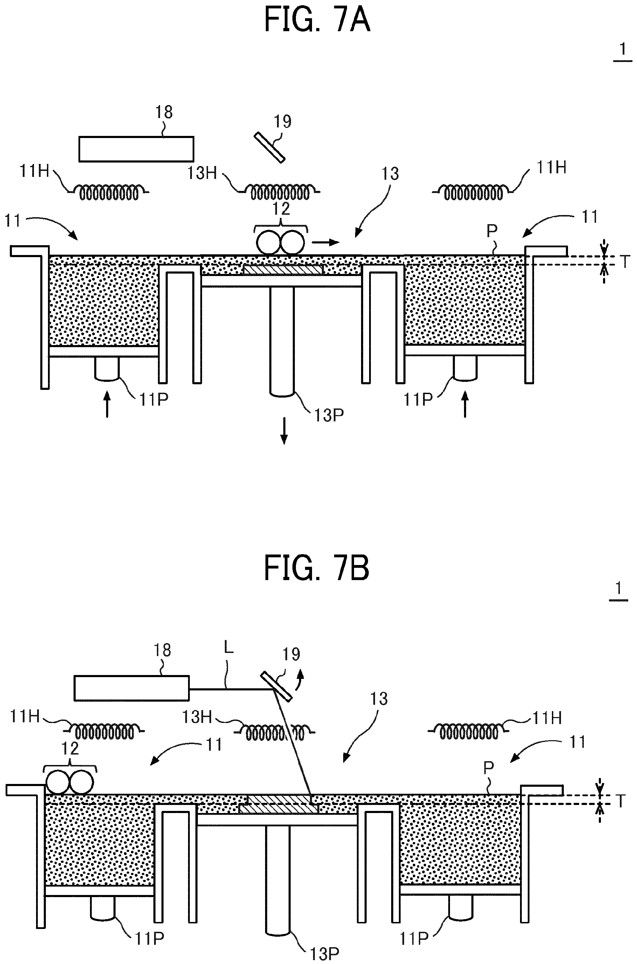

FIGS. 6A, 6B, 7A, and 7B are schematic diagrams illustrating the method of manufacturing a solid freeform fabrication object using the solid freeform fabrication device 1.

The heater 11H applies heat to the resin powder P accommodated in the supply tank 11. The temperature of the supply tank 11 is preferably as high as possible but not higher than the melting point of the resin particle P to reduce warp which occurs during melting ascribable to laser irradiation. However, to prevent melting of the resin powder P in the supply tank 11, the temperature is preferably at least 10 degrees C lower than the melting point of the resin powder P.

As illustrated in FIG. 6A, as one example of the supply process, the engine of the solid freeform fabrication device 1 drives the roller 12 to supply the resin powder P in the supply tank 11 to the laser scanning space 13 and level the laser scanning space 13, thereby forming a powder layer having a thickness of T corresponding to the thickness of a single layer.

The heater 13H applies heat to the resin powder P supplied to the laser scanning space 13. The temperature of the laser scanning space 13 is preferably as high as possible in order to reduce warp occurring during melting due to laser irradiation but at least 5 degrees C lower than the melting point of the resin particle P to prevent melting of the resin powder P at the laser scanning space 13.

The engine of the solid freeform fabrication device 1 receives input of multiple two-dimensional data created from a 3D model.

As illustrated in FIG. 6B, the engine of the solid freeform fabrication device 1 causes the electromagnetic irradiation source 18 to emit laser beams while moving the reflection surface of the reflection mirror 19 based on the two dimensional data for the part closest to the base of a fabrication object of the multiple two dimensional data.

The power of the laser has no particular limit and can be suitably selected to suit to a particular application. For example, it is preferably from 10 to 150 W. Due to the irradiation of the laser, of the powder layers, the resin powder P positioned corresponding to the pixel indicated by the two dimensional data for the part closest to the base of a fabrication object is melted. At the completion of the laser irradiation, the melted resin cures to form a sintered layer having a form in accordance with the two dimensional data for the part closest to the base of a fabrication object.

The thickness T of the sintered layer has no particular limit. For example, the average of the thickness T is preferably 10 $\mu$m or greater, more preferably 50 $\mu$m or greater, and furthermore preferably 100 $\mu$m or greater. The thickness T of the sintered layer has no particular limit. For example, the average is preferably less than 200 $\mu$m, more preferably less than 150 $\mu$m, and furthermore preferably less than 120 $\mu$m.

As illustrated in FIG. 7A, at the forming of the sintered layer closest to the base, the engine of the solid freeform fabrication device 1 lowers the laser scanning space 13 in an amount corresponding to the thickness T corresponding to the thickness of a single layer by the piston 13P to form a fabrication space having a thickness T on the laser scanning space 13. In addition, the engine of the solid freeform fabrication device 1 elevates the piston 11P to supply fresh resin powder P. Thereafter, as illustrated in FIG. 7A, the engine of the solid freeform fabrication device 1 drives the roller 12 to supply the resin powder P in the supply tank 11 to the laser scanning space 13 and level the laser scanning space 13, thereby forming a powder layer having a thickness of T corresponding to the thickness of a single layer.

As illustrated in FIG. 7B, the engine of the solid freeform fabrication device 1 causes the electromagnetic irradiation source 18 to emit laser beams while moving the reflection surface of the reflection mirror 19 based on the two dimensional data for the layer second closest to the base of the multiple two-dimensional data. Due to the irradiation of the laser, of the powder layers, the resin powder P positioned corresponding to the pixel indicated by the two dimensional data for the layer second closest to the base is melted. At the completion of the laser irradiation, the melted resin cures to form and laminate the sintered layer having a form of the two-dimensional data for the layer second closest to the base on the sintered layer closest to the base.

The solid freeform fabrication device 1 repeats the supplying process and the layer forming process to laminate sintered layers. At the completion of fabrication based on all of the multiple two-dimensional data, a fabrication object having the same form as the 3D model is obtained.

Solid Freeform Fabrication Object

The solid freeform fabrication object can be suitably manufactured by the device for manufacturing a solid freeform fabrication object of the present disclosure using the resin powder of the present disclosure.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples but is not limited thereto.

Example 1

Polybutylene terephthalate (PBT) resin (NOVADURAN® 5020, melting point of 218 degrees C, glass transition temperature of 43 degrees C, manufactured by Mitsubishi Engineering-Plastics Corporation) was stirred at a temperature 30 degrees C higher than the melting point thereof and thereafter resin melt liquid was extruded into a fibrous form using an extruder (manufactured by The Japan Steel Works, LTD.) having a nozzle having a circular orifice. The fiber was adjusted to have a fiber diameter of 55 $\mu$m by stretching the fiber 4 times. Thereafter, the formed fiber was disposed side by side in the same direction, and a pressure of 1.5 MPa was applied while heating at the temperature (150 degrees C), which is 68 degrees C lower than the melting point of the PBT resin to join the fiber into a sheet-like form. The cross-sectional form of each fiber joined into a sheet-like form was substantially polygonal.

Further, the fiber joined into the sheet-like form was fixed on a cutting device of a push-off type (NJ Series 1200 type, manufactured by Ogino Seiki Co., Ltd.) with a fixing jig and cut by a fiber method in such a manner that the cut width was 50 $\mu$m and the cut speed was 280 shots per minute (spm). Thereafter, in order to melt the surface by mechanical friction, the obtained cut article was treated with a multipurpose mixer (manufactured by Nippon Coke & Engineering Co., Ltd.) at a rotation speed of 5,000 rpm for 10 minutes. Resin powder of Example 1 was thus made.

Examples 2 to 21 and Comparative Examples 3

Resin powders of Examples 2 to 21 and Comparative Example 3 were obtained in the same manner as in Example 1 except that the raw materials and the methods of manufacturing particles were changed as shown in Table 1.

Type of Resin

The type of resin used was a polybutylene terephthalate (PBT) resin, a polyacetal resin (POM) resin, a polyether ether ketone (PEEK) resin, and a polyamide 12 (PA12) resin.

- Polybutylene terephthalate (PBT) resin (NOVADURAN® 5020, melting point of 218 degrees C, glass transition temperature of 43 degrees C, manufactured by Mitsubishi Engineering-Plastics Corporation
- Polyether ether ketone (PEEK) resin (HT P22PF, melting point of 343 degrees C, glass transition temperature of 143 degrees C, manufactured by Victrex plc.)
- Polyacetal (POM) resin (HC350, melting point of 175 degrees C, glass transition temperature of 125 degrees C, manufactured by Asahi Kasei Corporation)
- Polyamide 12 (PA12) resin (Daiamide, melting point of 170 degrees C, glass transition temperature of 50 degrees C, manufactured by Daicel-Evonik Ltd.)

The adhesive tape as a fixing method for the cutting device in Example 7 can be appropriately selected as long as the sheet can be fixed using a known adhesive tape.

The resin powders of Example 18 and Comparative Example 3 can be obtained by pulverizing pellets, etc. at room temperature (25 degrees C) using a pulverizer and classifying the pulverized pellet with a filter to remove particles having a diameter outside the target. It is preferable that the resin powder be obtained by pulverization at low temperatures of 0 degrees C or below (not higher than the brittleness temperature of each resin), more preferably -25 degrees C or below, and particularly preferably at extremely low temperatures of -100 degrees C or below utilizing resin brittleness.

Comparative Example 1

The resin powder of Comparative Example 1 was manufactured in the same manner as in Example 1 except that a fiber bundled with a clamp and made of the same PBT resin fiber as in Example 1 was fixed on a cutting device of a push-off type (NJ Series 1200 type, manufactured by Ogino Seiki Co., Ltd.) with a fixing jig.

Comparative Example 2

The resin powder of Comparative Example 2 was manufactured in the same manner as in Example 1 except that a fiber made of the same PBT resin fiber as in Example 1 was bundled with oil and fixed on a cutting device of a push-off type (NJ Series 1200 type, manufactured by Ogino Seiki Co., Ltd.).

Table 1

| | Raw material | | Particle manufacturing method | | | |
|---|---|---|---|---|---|---|
| | Type of resin | Fiber diameter (μm) | Manufacturing method | Temperature (degrees C) | Pressure (MPa) | Fixing method onto cutting device |
| Example 1 | PBT | 55 | Fiber method | 150 | 1.5 | Sheet clamping |
| Example 2 | PBT | 55 | Fiber method | 180 | 1.5 | Sheet clamping |
| Example 3 | PBT | 55 | Fiber method | 180 | 1.7 | Sheet clamping |
| Example 4 | PBT | 55 | Fiber method | 180 | 2.0 | Sheet clamping |
| Example 5 | PBT | 55 | Fiber method | 180 | 2.0 | None |
| Example 6 | PBT | 55 | Fiber method | 180 | 1.5 | None |
| Example 7 | PBT | 55 | Fiber method | 180 | 2.0 | Adhesive tape |
| Example 8 | PBT | 55 | Fiber method | 180 | 2.0 | Sheet clamping |
| Example 9 | PBT | 55 | Fiber method | 180 | 2.0 | Sheet clamping |

(continued)

| | Raw material | | Particle manufacturing method | | | |
|---|---|---|---|---|---|---|
| | Type of resin | Fiber diameter (μm) | Manufacturing method | Temperature (degrees C) | Pressure (MPa) | Fixing method onto cutting device |
| Example 10 | PBT | 55 | Fiber method | 180 | 2.0 | Sheet clamping |
| Example 11 | PBT | 55 | Fiber method | 180 | 2.0 | Sheet clamping |
| Example 12 | PBT | 55 | Fiber method | 180 | 2.0 | Sheet clamping |
| Example 13 | PBT | 20 | Fiber method | 180 | 2.0 | Sheet clamping |
| Example 14 | PBT | 5 | Fiber method | 180 | 2.0 | Sheet clamping |
| Example 15 | PBT | 55 | Fiber method | 180 | 2.0 | Sheet clamping |
| Example 16 | PBT | 55 | Fiber method | 180 | 2.0 | Sheet clamping |
| Example 17 | PBT | 55 | Fiber method | 180 | 2.0 | Sheet clamping |
| Example 18 | PBT | - | Pulverization method | - | - | - |
| Example 19 | POM | 50 | Fiber method | 180 | 2.0 | Sheet clamping |
| Example 20 | PA12 | 50 | Fiber method | 180 | 2.0 | Sheet clamping |
| Example 21 | PEEK | 15 | Fiber method | 180 | 2.0 | Sheet clamping |
| Comparative Example 1 | PBT | - | Fiber method | None | None | Fiber held by clamp fixed onto device |
| Comparative Example 2 | PBT | - | Fiber method | None | None | Placed fiber fixed with oil in device |
| Comparative Example 3 | PBT | - | Pulverization method | - | - | - |

Next, for obtained each resin powder, as described below, "particle form", "proportion of particles whose angle between the surface and the side surface is from 70 to 90 degrees", "average circularity", and "volume average particle diameter Dv" were measured. The results are shown in Table 2.

Particle Form

The thus-obtained resin powder was photographed with a magnifying power of 150x using a scanning electron microscope (SEM) (JSM-7800 FPRIME, manufactured by JEOL Ltd.). For the resin powder in the SEM image, the form having a first surface, a second surface, and a side surface with the entire of the peripheral areas of the first surface and the second surface in the range observed by the SEM stretching along the side surface was identified as a columnar form.

Next, when the side surface of the resin particle identified as a columnar form was observed to have a plurality of surfaces divided by lines (angles) in the height direction of the columnar form, the first opposing surface and the second opposing surface were determined to have a substantially polygonal form.

When no line was observed in the height direction of the columnar form while a smooth surface was uniformly observed, the first facing surface and the second facing surface were determined as substantially circular (substantially truly circular or elliptical).

Proportion of Particles Having Angle Formed between Surface and Side Surface of 70 to 90 Degrees

As illustrated in FIGS. 14A to 14E, the angle formed between the surface of the particle and the side surface of the particle observed with a scanning electron microscope (SEM) (JSM-7800FPRIME, manufactured by JEOL Ltd.) was measured. The angle is preferably from 70 to 90 degrees. The angles formed at two or more portions were measured and the average thereof was defined as the angle of the particle.

100 particles the angle of which was measurable were selected from the particles observed in the SEM image and the proportion of the particles having an average angle of from 70 to 90 degrees was calculated.

Volume Average Particle Diameter Dv and Average Circularity

The volume average particle diameter Dv ($\mu$m) of the obtained resin powder was measured by using a particle size distribution measuring instrument (Microtrac MT 3300EXII, manufactured by MicrotracBEL Corp.) employing a drying process (atmosphere) method without using a solvent, utilizing particle refractive index per resin powder.

The average circularity of the obtained resin powder was measured by the particle size distribution measuring device (F-PIA3000, manufactured by Sysmex Corporation).

Table 2

| | Particle property | | | | | |
|---|---|---|---|---|---|---|
| | Particle form | Proportion of particles having angle formed between surface and side surface of from 80 to 110 degrees (%) | Stirring treatment | Average Circularity | Cut width ($\mu$m) | Volume average particle diameter Dv ($\mu$m) |
| Example 1 | Cylindrical | 77 | Mechanical stirring: 5,000 rpm 10 minutes | 0.88 | 50 | 75 |
| Example 2 | Cylindrical | 80 | Mechanical stirring: 5,000 rpm 10 minutes | 0.88 | 50 | 73 |
| Example 3 | Cylindrical | 85 | Mechanical stirring: 5,000 rpm 10 minutes | 0.88 | 50 | 72 |
| Example 4 | Cylindrical | 90 | Mechanical stirring: 5,000 rpm 10 minutes | 0.88 | 50 | 70 |
| Example 5 | Cylindrical | 70 | Mechanical stirring: 5,000 rpm 10 minutes | 0.88 | 50 | 78 |
| Example 6 | Cylindrical | 75 | Mechanical stirring: 5,000 rpm 10 minutes | 0.86 | 50 | 80 |
| Example 7 | Cylindrical | 80 | Mechanical stirring: 5,000 rpm 10 minutes | 0.88 | 50 | 80 |
| Example 8 | Cylindrical | 90 | Mechanical stirring: 5,000 rpm 10 minutes | 0.88 | 1 | 20 |
| Example 9 | Cylindrical | 90 | Mechanical stirring: 5,000 rpm 10 minutes | 0.88 | 10 | 30 |

(continued)

| | Particle property | | | | | |
|---|---|---|---|---|---|---|
| | Particle form | Proportion of particles having angle formed between surface and side surface of from 80 to 110 degrees (%) | Stirring treatment | Average Circularity | Cut width ($\mu$m) | Volume average particle diameter Dv ($\mu$m) |
| Example 10 | Cylindrical | 90 | Mechanical stirring: 5,000 rpm 10 minutes | 0.88 | 150 | 120 |
| Example 11 | Cylindrical | 90 | Mechanical stirring: 5,000 rpm 10 minutes | 0.88 | 500 | 450 |
| Example 12 | Cylindrical | 90 | Mechanical stirring: 5,000 rpm 10 minutes | 0.88 | 1000 | 900 |
| Example 13 | Cylindrical | 90 | Mechanical stirring: 5,000 rpm 10 minutes | 0.88 | 20 | 40 |
| Example 14 | Cylindrical | 90 | Mechanical stirring: 5,000 rpm 10 minutes | 0.88 | 5 | 7 |
| Example 15 | Cylindrical | 90 | Mechanical stirring: 5,000 rpm 3 minutes | 0.80 | 50 | 50 |
| Example 16 | Cylindrical | 90 | Mechanical stirring: 3000 rpm 3 minutes | 0.75 | 50 | 50 |
| Example 17 | Cylindrical | 90 | None | 0.65 | 50 | 50 |
| Example 18 | Irregular | - | Mechanical stirring: 5,000 rpm 10 minutes | 0.70 | - | 60 |
| Example 19 | Cylindrical | 90 | Mechanical stirring: 5,000 rpm 10 minutes | 0.88 | 50 | 70 |
| Example 20 | Cylindrical | 90 | Mechanical stirring: 5,000 rpm 10 minutes | 0.88 | 50 | 70 |

(continued)

| | Particle property | | | | | |
|---|---|---|---|---|---|---|
| | Particle form | Proportion of particles having angle formed between surface and side surface of from 80 to 110 degrees (%) | Stirring treatment | Average Circularity | Cut width ($\mu$m) | Volume average particle diameter Dv ($\mu$m) |
| Example 21 | Cylindrical | 90 | Mechanical stirring: 5,000 rpm 10 minutes | 0.88 | 20 | 40 |
| Comparative Example 1 | Cylindrical | 65 | Mechanical stirring: 5,000 rpm 10 minutes | 0.83 | 50 | 72 |
| Comparative Example 2 | Cylindrical | 50 | Mechanical stirring: 5,000 rpm 10 minutes | 0.83 | 50 | 72 |
| Comparative Example 3 | Irregular | - | Mechanical stirring: 5,000 rpm 10 minutes | 0.70 | - | 60 |

Next, for each of the obtained resin powder, "Aspect ratio range", "Cumulative number frequency", "Occupancy (number frequency)", "Tensile strength of solid freeform fabrication object", and "Surface roughness Ra" were evaluated. The results are shown in Tables 3 and 4.

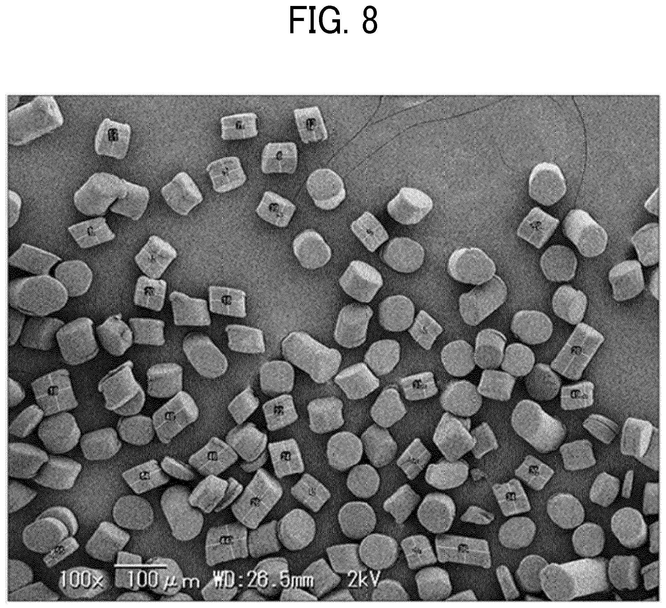

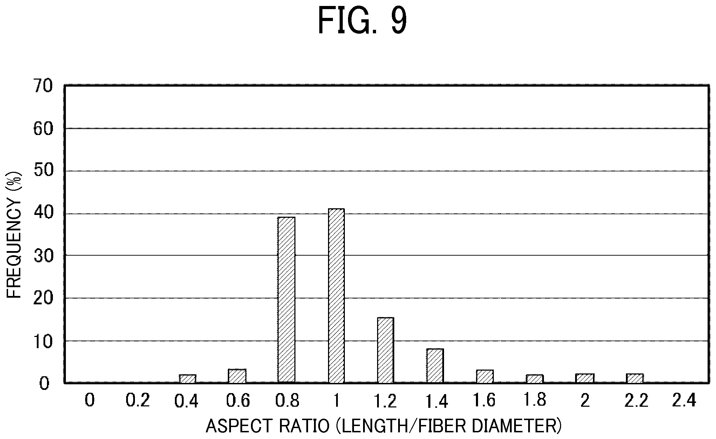

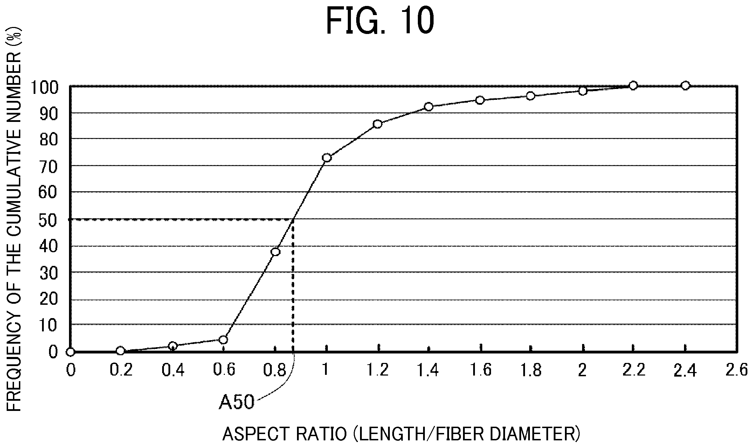

FIG. 8 is a photograph of the resin powder manufactured in Example 4, FIG. 9 is a graph illustrating the relationship between the aspect ratio and the frequency of the resin powder manufactured in Example 4, and FIG. 10 is a graph illustrating the relationship between the aspect ratio and the cumulative number frequency of the resin powder manufactured in Example 4.

The resin powder of Example 4 was found to have a uniform form not containing fine powder according to the photograph of FIG. 8. According to the frequency graph of FIG. 9 by the measuring method of the present disclosure, the aspect ratio of the particle was found to be uniform. In addition, by the frequency graph, the median A50 of the aspect ratio was obtained. It was 0.9 in the case of Example 4. Also, the distribution of aspect ratio can be calculated in the same manner. According to the above-mentioned, the resin powder of Example 4 can be said to have extremely uniform aspect ratio and form.

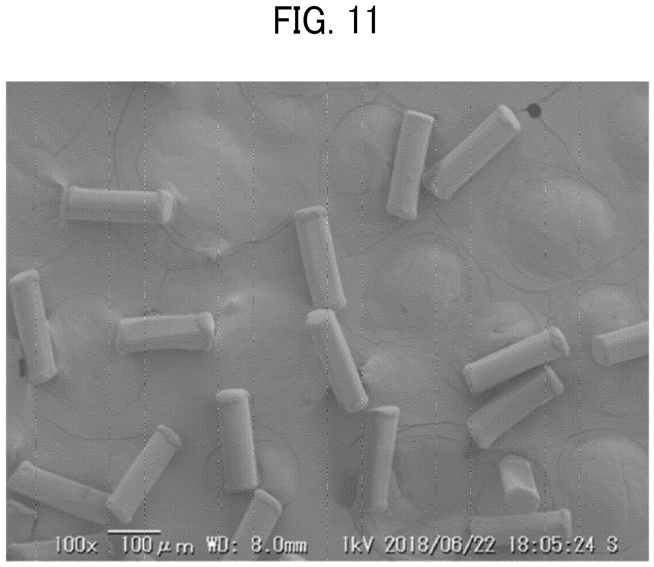

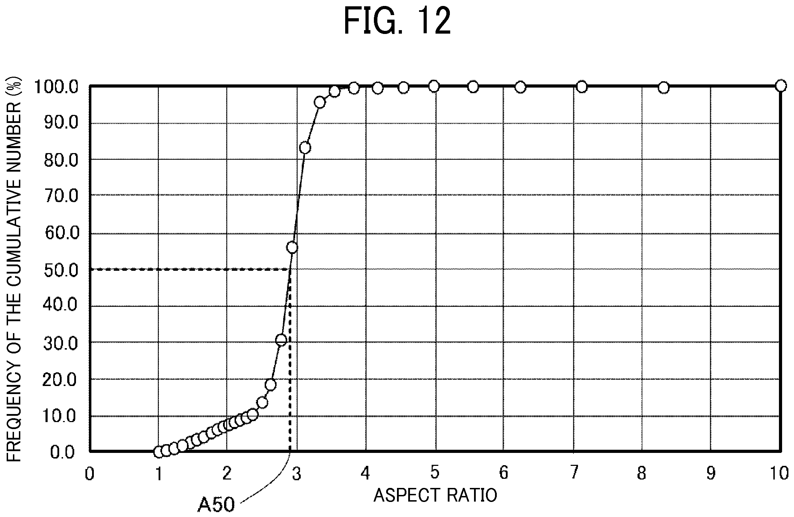

FIG. 11 is a photograph showing the resin powder manufactured in Example 10 and FIG. 12 is a graph illustrating the relationship between the aspect ratio and the cumulative number frequency of the resin powder manufactured in Example 10. As illustrated in FIG. 11, the aspect ratio can be controlled by adjusting the cut width. In addition, the resin powder of Example 10 had an aspect ratio distribution close to that of Example 4, indicating that a uniform powder with a uniform aspect ratio was obtained.

Range of Aspect Ratio of Resin Powder, Cumulative Number Frequency, and Occupancy (Number Frequency)

The general aspect ratio is (minor axis L/major axis D) of resin powder. In the present disclosure, the aspect ratio was obtained from an SEM image obtained by observation with a scanning electron microscope (SEM) in the following manner.

1. When a particle contained in a resin powder has a surface having a maximum length corresponding to 50 percent or more of the particle diameter, L/D is defined as the aspect ratio, where D represents the length of the surface and L represents the length of a side surface, which is perpendicular to the surface.
2. When a particle contained in a resin powder does not have a surface having a maximum length corresponding to 50 percent or more of the particle diameter, the ratio of the major axis L to the minor axis D of the particle is defined as the aspect ratio.

The details of the aspect ratio calculation are shown in FIGS. 13A to 13D. In the case of an irregularly shaped powder as illustrated in FIG. 13A, the aspect ratio (major axis L/minor axis D) was calculated as in 2 mentioned above. Similarly, spherical particles as illustrated in FIG. 13B were calculated according to 2 mentioned above. In the case of a particle having a surface as illustrated in FIGS. 13C and 13D, the aspect ratio was calculated according to 1 mentioned above.

For particles observed with a scanning electron microscope (SEM), 100 particles the aspect of which were calculable were measured to calculate the number distribution of the aspect ratio to obtain the median A50 of the aspect ratio.

Each of the aspect ratio ranges was defined by inequalities 1, 2, and 3. From the number distribution of the aspect ratio, the "aspect ratio range", "cumulative number frequency", and "occupancy (number frequency)" was obtained.

$$A50 - 1 \leq X \leq A50 + 1 \qquad \text{Inequality 1}$$

$$A50 - 0.5 \leq Y \leq A50 + 1 \qquad \text{Inequality 2}$$

$$A50 - 0.5 \leq Z \leq A50 + 0.5 \qquad \text{Inequality 3.}$$

Tensile Strength of Solid Freeform Fabrication Object and Tensile Strength Ratio

The thus-obtained resin powder was added to the supply bed of an SLS type fabrication device (AM S5500P, manufactured by Ricoh Company, Ltd.) to manufacture a solid freeform fabrication object. The setting conditions were: average layer thickness of 0.1 mm, a laser power of from 10 to 150 W, a laser scanning space of 0.1 mm, and a part bed temperature of -3 degrees C below the melting point. In the SLS type fabrication device, five tensile test specimens (XY fabrication object) having a long side aligned in the XY surface direction (the surface direction in which the roller 12 travels in FIG. 5) and five tensile test specimens (Z fabrication object) having a long side aligned in the Z axis direction (direction perpendicular to the surface direction in which the roller 12 travels in FIG. 5) were fabricated at the center of the laser scanning space 13 in the SLS type fabrication device. The gap between each fabrication object was 5 mm.

The test specimen was fabricated according to the regulation of International Organization for Standardization (ISO) 3167 Type 1A multi-purpose canine bone-like test specimen (specimen has a center portion of a length of 80 mm, a thickness of 4 mm, and a width of 10 mm). The fabrication time was set to 50 hours.

Next, using the same resin powder, five tensile test specimens having the same form were formed by injection molding.

Tensile strength of the XY fabrication object and Z fabrication object as the tensile test specimens obtained by the SLS type fabrication device was measured using a tensile tester (AGS-5kN, manufactured by Shimadzu Corporation) according to ISO 527. The test speed in the tensile strength test was constant at 50 mm/minute. Each tensile test specimen was subjected to the test five times and the average of the measuring values was defined as the tensile strength.

Thereafter, the tensile strength of the tensile test specimen obtained by the SLS type fabrication object was divided by the tensile strength (50 MPa) of the tensile test specimen obtained by injection molding to obtain the tensile strength ratio of the tensile test specimen for the tensile strength evaluation.

When both the tensile strength of the XY fabrication object and the Z fabrication object were 70 percent or more of that of the object obtained by injection molding, it was graded as practically usable.

Measuring of Surface Roughness Ra of Solid Freeform Fabrication Object

Each of the obtained resin powder was added to the supply bed of the SLS type fabrication object (AM S5500P, manufactured by Ricoh Co., Ltd.) to manufacture a solid freeform fabrication cuboid having a side length of 5cm and an average thickness of 0.5 cm.

The surface roughness Ra of the side surface of the obtained fabricated solid freeform fabrication object (cuboid) was measured according to ISO 1302 standard regulation (JIS B 0031 format). The measuring device was VR3200, manufactured by KEYENCE CORPORATION. The surface Roughness Ra was determined as experimental value, which was the average of five measuring results. In addition, as the value of the surface roughness Ra decreases, the texture of the surface of the solid freeform fabrication object becomes smooth. The surface roughness Ra of 30 $\mu$m or lower was evaluated as practically usable.

Table 3

| | Aspect ratio range | | | | | Cumulative number frequency (% by number) | | | |
|---|---|---|---|---|---|---|---|---|---|
| | A50-1 | A50-0.5 | A5 0 | A50+0. 5 | A50+ 1 | A50 -1 | A50-0.5 | A50+0. 5 | A50+ 1 |
| Example 1 | -0.06 | 0.44 | 0.9 4 | 1.44 | 1.94 | 0 | 7 | 86 | 94 |
| Example 2 | -0.08 | 0.42 | 0.9 2 | 1.42 | 1.92 | 0 | 6 | 85 | 97 |
| Example 3 | -0.09 | 0.41 | 0.9 1 | 1.41 | 1.91 | 0 | 5 | 89 | 97 |
| Example 4 | -0.1 | 0.4 | 0.9 | 1.4 | 1.9 | 0 | 4 | 90 | 97 |
| Example 5 | 0.4 | 0.9 | 1.4 | 1.9 | 2.4 | 3 | 10 | 40 | 58 |
| Example 6 | 0.5 | 1 | 1.5 | 2 | 2.5 | 4 | 10 | 38 | 55 |
| Example 7 | 0.3 | 0.8 | 1.3 | 1.8 | 2.3 | 1 | 10 | 80 | 73 |
| Example 8 | -0.98 | -0.48 | 0.0 2 | 0.52 | 1.02 | 0 | 0 | 98 | 100 |
| Example 9 | -0.8 | -0.3 | 0.2 | 0.7 | 1.2 | 0 | 0 | 97 | 100 |
| Example 10 | 1.9 | 2.4 | 2.9 | 3.4 | 3.9 | 6.9 | 11 | 96 | 100 |
| Example 11 | 8.9 | 9.4 | 9.9 | 10.4 | 10.9 | 3 | 6 | 96 | 100 |
| Example 12 | 19 | 19.5 | 20 | 20.5 | 21 | 4 | 7 | 97 | 99 |
| Example 13 | -0.1 | 0.4 | 0.9 | 1.4 | 1.9 | 0 | 4 | 90 | 97 |
| Example 14 | -0.1 | 0.4 | 0.9 | 1.4 | 1.9 | 0 | 4 | 90 | 97 |
| Example 15 | -0.1 | 0.4 | 0.9 | 1.4 | 1.9 | 0 | 4 | 90 | 97 |
| Example 16 | -0.1 | 0.4 | 0.9 | 1.4 | 1.9 | 0 | 4 | 90 | 97 |
| Example 17 | -0.1 | 0.4 | 0.9 | 1.4 | 1.9 | 0 | 4 | 90 | 97 |
| Example 18 | 0.2 | 0.7 | 1.2 | 1.7 | 2.2 | 10 | 30 | 60 | 90 |
| Example 19 | -0.1 | 0.4 | 0.9 | 1.4 | 1.9 | 0 | 4 | 90 | 97 |
| Example 20 | -0.1 | 0.4 | 0.9 | 1.4 | 1.9 | 0 | 4 | 90 | 97 |
| Example 21 | -0.1 | 0.4 | 0.9 | 1.4 | 1.9 | 0 | 4 | 90 | 97 |
| Comparativ e Example 1 | 0.8 | 1.3 | 1.8 | 2.3 | 2.8 | 40 | 50 | 60 | 89 |
| Comparativ e Example 2 | 0.8 | 1.3 | 1.8 | 2.3 | 2.8 | 40 | 50 | 60 | 89 |
| Comparativ e Example 3 | 1 | 1.5 | 2 | 2.5 | 3 | 40 | 45 | 55 | 83 |

Table 4

| | Occupancy (number frequency, % by number) | | | Evaluation result | | |
|---|---|---|---|---|---|---|
| | (A50 + 1) - (A50 - 1) | (A50 + 1) - (A50 - 0.5) | (A50 + 0.5) - (A50 - 0.5) | Tensile strength (MPa) | Tensile strength ratio (%) | Surface roughness Ra (μm) |
| Example 1 | 94 | 87 | 79 | 41 | 82 | 25 |
| Example 2 | 97 | 91 | 79 | 43 | 86 | 22 |
| Example 3 | 97 | 92 | 84 | 48 | 96 | 19 |
| Example 4 | 97 | 93 | 86 | 50 | 100 | 20 |
| Example 5 | 55 | 48 | 30 | 35 | 70 | 23 |

(continued)

| | Occupancy (number frequency, % by number) | | | Evaluation result | | |
|---|---|---|---|---|---|---|
| | (A50 + 1) - (A50 - 1) | (A50 + 1) - (A50 - 0.5) | (A50 + 0.5) - (A50 - 0.5) | Tensile strength (MPa) | Tensile strength ratio (%) | Surface roughness Ra ($\mu$m) |
| Example 6 | 51 | 45 | 28 | 35 | | 26 |
| Example 7 | 72 | 63 | 70 | 41 | 82 | 25 |
| Example 8 | 100 | 100 | 98 | 50 | 100 | 8 |
| Example 9 | 100 | 100 | 97 | 50 | 100 | 9 |
| Example 10 | 93.1 | 89 | 85 | 50 | 100 | 26 |
| Example 11 | 97 | 94 | 90 | 53 | 106 | 27 |
| Example 12 | 95 | 92 | 90 | 55 | 110 | 30 |
| Example 13 | 97 | 93 | 86 | 52 | 104 | 13 |
| Example 14 | 97 | 93 | 86 | 54 | 109 | 5 |
| Example 15 | 97 | 93 | 86 | 50 | 100 | 24 |
| Example 16 | 97 | 93 | 86 | 51 | 102 | 25 |
| Example 17 | 97 | 93 | 86 | 45 | 90 | 30 |
| Example 18 | 80 | 60 | 30 | 40 | 80 | 29 |
| Example 19 | 97 | 93 | 86 | 50 | 100 | 20 |
| Example 20 | 97 | 93 | 86 | 50 | 100 | 20 |
| Example 21 | 97 | 93 | 86 | 52 | 104 | 13 |
| Comparative Example 1 | 49 | 39 | 10 | 30 | 60 | 40 |
| Comparative Example 2 | 49 | 39 | 10 | 30 | 60 | 40 |
| Comparative Example 3 | 43 | 38 | 10 | 33 | 66 | 45 |

**Claims**

1. A resin powder comprising:

   a resin comprising particles,
   wherein an aspect ratio of the particle contained in the resin powder is obtained from an SEM image obtained by observation with a scanning electron microscope (SEM), the aspect ratio being defined by length L of side surface to length D of surface plane,
   where the side surface is defined as the surface perpendicular to the plane surface of the SEM image, **characterized in that**
   a proportion of the particles in an aspect ratio range X obtained from number distribution of the aspect ratio and represented by the following inequality 1 is 50 percent by number or more: A50 - 1 $\leq$ X $\leq$ A50 + 1 Inequality 1, where A50 represents a median of the aspect ratio.

2. The resin powder according to claim 1, wherein the proportion of the particles in the aspect ratio range X is 70 percent by number or more.

3. The resin powder according to claim 1 or 2, wherein the proportion of the particles in the aspect ratio range X is 90 percent by number or more.

4. The resin powder according to any one of claims 1 to 3, wherein a proportion of the particles in an aspect ratio range Y represented by the following inequality 2 is 90 percent by number or more in the number distribution of the aspect ratio of the resin powder:

$$A50 - 0.5 \leq Y \leq A50 + 1 \qquad \text{Inequality 2.}$$

5. The resin powder according to any one of claims 1 to 4, wherein a proportion of the particles in an aspect ratio range Z represented by the following inequality 3 is 80 percent by number or more in the number distribution of the aspect ratio of the resin powder:

$$A50 - 0.5 \leq Z \leq A50 + 0.5 \qquad \text{Inequality 3.}$$

6. The resin powder according to any one of claims 1 to 5, wherein the particles have a columnar form.

7. The resin powder according to any one of claims 1 to 3 having an average circularity of from 0.60 to 0.95.

8. The resin powder according to any one of claims 1 to 7, wherein each of the particles has at least one surface and the surface has a maximum length having a 50 percent or greater of a particle diameter of the each of the particles.

9. The resin according to claim 8, wherein a ratio (L/D) is from 0.5 to 5, where D represents a length of the surface and L represents a length of a side surface perpendicular to the surface.

10. The resin powder according to claim 9, wherein a proportion of the particles having an angle formed by the surface and the side surface of from 70 to 90 degrees in the resin powder is 85 percent or more.

11. The resin powder according to any one of claims 1 to 10, wherein the particles have a volume average particle diameter of from 100 nm to 1 mm.

12. The resin powder according to any one of claims 1 to 11, wherein the resin comprises at least one member selected from the group consisting of polybutylene terephthalate, polyamide, polyacetal, and polyether ether ketone.

13. The resin powder according to any one of claims 1 to 12, for solid freeform fabrication.

14. A method of manufacturing a solid freeform fabrication object comprising:

forming a layer comprising a resin powder according to any one of claims 1 to 13 comprising a resin comprising particles,
wherein a proportion of the particles in an aspect ratio range X represented by the following inequality 1 is 50 percent by number or more in a number distribution of an aspect ratio of the resin powder:
A50 - 1 ≤ X ≤ A50 + 1 Inequality 1, where A50 represents a median of the aspect ratio;
irradiating the layer with electromagnetic wave to melt the layer; and
repeating the forming and the irradiating.

15. A device (1) for manufacturing a solid freeform fabrication object comprising:

a supply tank (11) configured to accommodate a resin powder according to any one of claims 1 to 13;
a layer forming device (12) configured to form a layer of the resin powder; and
a melting device (18) configured to irradiate the layer with electromagnetic wave to melt the layer.

**Patentansprüche**

1. Harzpulver, das aufweist:

ein Harz, das Partikel aufweist,
wobei ein Seitenverhältnis von den Partikeln, die in dem Harzpulver enthalten sind, von einem SEM-Bild erhalten wird, das durch Beobachtung mit einem abtastenden Elektronenmikroskop (SEM) erhalten wird, wobei das Seitenverhältnis durch die Länge L von einer Seitenfläche zu der Länge D von einer Flächenebene definiert ist, wobei die Seitenfläche als die Fläche senkrecht zu der ebenen Fläche von dem SEM-Bild definiert ist, **dadurch gekennzeichnet, dass**
eine Proportion von den Partikeln in einem Seitenverhältnisbereich X, die von der Zahlenverteilung von dem Seitenverhältnis erhalten wird und durch die folgende Ungleichung 1 dargestellt wird, ist 50 % nach der Anzahl oder mehr:

$$A50 - 1 \leq X \leq A50 + 1 \quad \text{Ungleichung 1,}$$

wobei A50 einen Median von dem Seitenverhältnis darstellt.

2. Harzpulver gemäß Anspruch 1, wobei der Teil von den Partikeln in dem Seitenverhältnisbereich X 70 % nach der Anzahl oder mehr beträgt.

3. Harzpulver gemäß Anspruch 1 oder 2, wobei der Teil von den Partikeln in dem Seitenverhältnisbereich X 90 % nach der Anzahl oder mehr beträgt.

4. Harzpulver gemäß irgendeinem der Ansprüche 1 bis 3, wobei der Teil von den Partikeln in einem Seitenverhältnisbereich Y, dargestellt durch die folgende Ungleichung 2, 90 % nach der Anzahl oder mehr in der Zahlenverteilung von dem Seitenverhältnis von dem Harzpulver beträgt:

$$A50 - 0.5 \leq Y \leq A50 + 1 \quad \text{Ungleichung 2}$$

5. Harzpulver gemäß irgendeinem der Ansprüche 1 bis 4, wobei ein Teil von den Partikeln in einem Seitenverhältnisbereich Z, dargestellt durch die folgende Ungleichung 3, 80 % nach der Anzahl oder mehr in der Zahlenverteilung von dem Seitenverhältnis in dem Harzpulver beträgt:

$$A50 - 0.5 \leq Z \leq A50 + 0.5 \quad \text{Ungleichung 3}$$

6. Harzpulver gemäß irgendeinem der Ansprüche 1 bis 5, wobei die Partikel eine Säulenform haben.

7. Harzpulver gemäß irgendeinem der Ansprüche 1 bis 3, das eine mittlere Zirkulation von 0.6 bis 0.95 hat.

8. Harzpulver gemäß irgendeinem der Ansprüche 1 bis 7, wobei jeder der Partikel zumindest eine Oberfläche hat und die Oberfläche eine maximale Länge hat, die 50 % oder größer von einem Partikeldurchmesser von jedem der Partikel ist.

9. Harzpulver gemäß Anspruch 8, wobei ein Verhältnis (L/D) von 0.5 bis 5 beträgt, wobei D eine Länge der Oberfläche darstellt und L eine Länge von einer Seitenfläche senkrecht zu der Oberfläche darstellt.

10. Harzpulver gemäß Anspruch 9, wobei eine Proportion der Partikel, die einen Winkel von 70 bis 90 Grad in dem Harzpulver hat, der durch die Oberfläche und die Seitenfläche gebildet wird, 85 % oder mehr beträgt.

11. Harzpulver gemäß irgendeinem der Ansprüche 1 bis 10, wobei die Partikel einen volumendurchschnittlichen Partikeldurchmesser von 100nm bis 1mm haben.

12. Harzpulver gemäß irgendeinem der Ansprüche 1 bis 11, wobei das Harz zumindest ein Mitglied aufweist, das aus der Gruppe ausgewählt ist, die aus Polybutylenterephtalat, Polyamid, Polyacetal und Polyetherether Keton besteht.

13. Harzpulver gemäß irgendeinem der Ansprüche 1 bis 12 für die solide Freiformherstellung.

14. Verfahren zur Herstellung eines soliden Freiformherstellungs-Objekts, das aufweist:

Ausbilden einer Schicht, die ein Harzpulver gemäß irgendeinem der Ansprüche 1 bis 13 aufweist, die ein Harz aufweist, das Partikel aufweist, wobei ein Teil von den Partikeln in einem Seitenverhältnisbereich X, dargestellt durch die folgende Ungleichung 1, 50 % nach Anzahl oder mehr in einer Zahlenverteilung von einem Seitenverhältnis von dem Harzpulver beträgt:

$$A50 - 1 \leq X \leq A50 + 1 \quad \text{Ungleichung 1,}$$

wobei A50 einen Median von dem Seitenverhältnis darstellt;
Bestrahlen der Schicht mit elektromagnetischer Welle, um die Schicht zu schmelzen,
Wiederholen der Formung und der Bestrahlung.

**15.** Vorrichtung (1) zum Herstellen eines soliden Freiformherstellungsobjekts, die aufweist:

einen Zufuhrtank (11), der konfiguriert ist, um ein Harzpulver gemäß irgendeinem der Ansprüche 1 bis 13 unterzubringen;
eine Schichtausbildungseinrichtung (12), die konfiguriert ist, um eine Schicht von dem Harzpulver auszubilden; und
eine Schmelzeinrichtung (18), die konfiguriert ist, um die Schicht mit elektromagnetischer Welle zu bestrahlen, um die Schicht zu schmelzen.

**Revendications**

**1.** Poudre de résine, comprenant :

une résine comprenant des particules,
dans laquelle un rapport d'aspect de la particule contenue dans la poudre de résine est obtenu à partir d'une image MEB obtenue par observation avec un microscope électronique à balayage (MEB), le rapport d'aspect étant défini par la longueur L de la surface latérale par rapport à la longueur D du plan de surface, où la surface latérale est définie comme étant la surface perpendiculaire au plan de surface de l'image MEB, **caractérisé en ce que**
une proportion des particules dans une plage de rapport d'aspect X obtenue à partir d'une distribution en nombre du rapport d'aspect et représentée par l'Inégalité 1 suivante est de 50 pour cent par nombre, ou plus : A50 - 1 $\leq$ X $\leq$ A50 + 1, Inégalité 1, où A50 représente une médiane du rapport d'aspect.

**2.** Poudre de résine selon la revendication 1, dans laquelle la proportion des particules dans la plage de rapport d'aspect X est de 70 pour cent par nombre, ou plus.

**3.** Poudre de résine selon la revendication 1 ou 2, dans laquelle la proportion des particules dans la plage de rapport d'aspect X est de 90 pour cent par nombre ou plus.

**4.** Poudre de résine selon l'une quelconque des revendications 1 à 3, dans laquelle une proportion des particules dans une plage de rapport d'aspect Y représentée par l'Inégalité 2 suivante est de 90 pour cent par nombre, ou plus, dans la distribution en nombre du rapport d'aspect de la poudre de résine :

$$A50 - 0{,}5 \leq Y \leq A50 + 1 \quad \text{Inégalité 2.}$$

**5.** Poudre de résine selon l'une quelconque des revendications 1 à 4, dans laquelle une proportion des particules dans une plage de rapport d'aspect Z représentée par l'Inégalité 3 suivante est de 80 pour cent par nombre, ou plus, dans la distribution en nombre du rapport d'aspect de la poudre de résine :

$$A50 - 0{,}5 \leq Z \leq A50 + 0{,}5 \quad \text{Inégalité 3.}$$

**6.** Poudre de résine selon l'une quelconque des revendications 1 à 5, dans laquelle les particules ont une forme en colonne.

**7.** Poudre de résine selon l'une quelconque des revendications 1 à 3, ayant une circularité moyenne de 0,60 à 0,95.

**8.** Poudre de résine selon l'une quelconque des revendications 1 à 7, dans laquelle chacune des particules a au moins une surface et la surface a une longueur maximum ayant une valeur de 50 pour cent, ou plus, d'un diamètre particulaire de chacune des particules.

**9.** Résine selon la revendication 8, dans laquelle un rapport (L/D) est de 0,5 à 5, où D représente une longueur de la surface et L représente une longueur d'une surface latérale perpendiculaire à la surface.

**10.** Poudre de résine selon la revendication 9, dans laquelle une proportion des particules ayant un angle formé par la surface et la surface latérale de 70 à 90 degrés dans la poudre de résine est de 85 pour cent, ou plus.

**11.** Poudre de résine selon l'une quelconque des revendications 1 à 10, dans laquelle les particules ont un diamètre particulaire moyen en volume de 100 nm à 1 mm.

**12.** Poudre de résine selon l'une quelconque des revendications 1 à 11, dans laquelle la résine comprend au moins un élément sélectionné parmi le groupe constitué de polybutylène téréphtalate, de polyamide, de polyacétal, et de polyéther-éther-cétone.

**13.** Poudre de résine selon l'une quelconque des revendications 1 à 12, pour fabrication de forme libre solide.

**14.** Procédé de fabrication d'un objet de fabrication de forme libre solide, comprenant :

la formation d'une couche comprenant une poudre de résine selon l'une quelconque des revendications 1 à 13 comprenant une résine comprenant des particules, dans lequel une proportion des particules dans une plage de rapport d'aspect X représentée par l'Inégalité 1 suivante est de 50 pour cent par nombre, ou plus, dans une distribution en nombre d'un rapport d'aspect de la poudre de résine :

$$A50 - 1 \leq X \leq A50 + 1 \qquad \text{Inégalité 1, où A50 représente une médiane du rapport}$$

où A50 représente une médiane du rapport d'aspect ;
l'irradiation de la couche avec une onde électromagnétique pour faire fondre la couche ; et
la répétition de la formation et de l'irradiation.

**15.** Dispositif (1) pour fabriquer un objet de fabrication de forme libre solide, comprenant :

un réservoir d'alimentation (11) configuré pour contenir une poudre de résine selon l'une quelconque des revendications 1 à 13 ;
un dispositif de formation de couche (12) configuré pour former une couche de la poudre de résine ; et
un dispositif de fusion (18) configuré pour irradier la couche avec une onde électromagnétique pour faire fondre la couche.

FIG. 1A

FIG. 1B

FIG. 1C

FIG. 1D

FIG. 1E

FIG. 1F

FIG. 1G

FIG. 1H

FIG. 1I

## FIG. 2

## FIG. 3

# FIG. 4

# FIG. 5

# FIG. 6A

# FIG. 6B

# FIG. 7A

1

# FIG. 7B

1

# FIG. 8

FIG. 9

EP 3 620 283 B1

FIG. 10

FIG. 11

EP 3 620 283 B1

# FIG. 12

FIG. 13A

FIG. 13B

FIG. 13C

FIG. 13D

# FIG. 14A

# FIG. 14B

# FIG. 14C

# FIG. 14D

# FIG. 14E

## REFERENCES CITED IN THE DESCRIPTION

**Patent documents cited in the description**

- WO 2017112723 A1
- EP 3159141 A1
- EP 3415563 A1
- EP 3272787 A1
- US 6531086 B